# EUROPEAN PATENT SPECIFICATION

(11) **EP 0 471 972 B1**
(45) Date of publication and mention of the grant of the patent: **26.03.1997**
(21) Application number: 91111567.3
(22) Date of filing: 11.07.1991
(51) Int. Cl.: C08G 18/81, C08G 18/62, C09D 133/06, C09D 5/38, B05D 7/16, C09D 175/08

(54) **Metallic water borne base coat composition**
Metallische, wässrige Grundlackzusammensetzung
Revêtement de base aqueux métallique

(30) Priority: 13.07.1990 US 553067; 13.07.1990 US 553066; 13.07.1990 US 553070; 13.07.1990 US 553068; 10.09.1990 US 553064; 10.09.1990 US 553100; 10.09.1990 US 554606; 10.09.1990 US 553069
(43) Date of publication of application: 26.02.1992
(73) Proprietor: BASF Corporation, Clifton, New Jersey 07015-6001 (US)
(72) Inventor: Anderson, James L. Jr., Grand Rapids, Ohio 43522 (US); Finkenauer, Horst J., Pune, India 411004 (US); Newton, David L., Toledo, Ohio 43613 (US); Jones, Jeff P., Ypsilanti, Michigan 48197 (US); McClanahan, Craig, Bowlimg Green, Ohio 43402 (US)
(74) Representative: Münch, Volker, Dr.

(56) References cited:
- EP-A- 0 287 144
- EP-A- 0 326 984
- EP-A- 0 354 261
- EP-A- 0 365 098
- EP-A- 0 424 705
- GB-A- 2 021 599
- US-A- 4 719 132

## Description

The present invention is concerned with kit compositions for the preparation of waterborne coating compositions and the use of these kit compositions in the refinish market.

It is customary in the painting of an automobile that a series of coatings be applied to the substrate. The first coat being the primer followed by the base coat and finally the clear coat. The base coat provides the good decorative quality to the final finish via organic and inorganic pigments. In many automobile finishes, a metallic finish is desired. To obtain this metallic effect, metallic pigments are present in the base coat, typically aluminum flakes. The aluminum flakes in the base coat contribute to the glossy lustrous appearance of the final finish.

Another feature that aluminum flakes contribute to the appearance of the final finish is the change of brightness as the viewing angle is changed. Typically, the final finish is bright when viewed at a 90 degree angle, however, when the viewing angle is changed to 180 degrees, the coating has a dark appearance. This phenomenon is known as "flop" in the automotive field and is highly desired. The ultimate in "flop" is achieved when the aluminum flakes are orientated parallel to the substrate. Random orientation of the aluminum flake results in a final finish exhibiting bright and dark areas when viewed at 90 degrees. This appearance is known as mottling and detracts from the final appearance of the final finish. In general, the metal fixation in base coats is achieved by a rheology modifiers such as inorganic and organic thickeners. The particular rheology control agent used in this invention results in a non-mottled, high head-on-brightness, outstanding flop, and high quality finish, even in the case of a silver metallic base coat.

In the current market place, automobile coatings, especially base coats, contain a high level of organic solvent. With increasing concern about the volatile organic emissions into the atmosphere, an intensive effort in research and development of coatings containing mainly water as the solvent with a small level of organic solvent is under way. An example of such an effort is U.S. patent No. 4,730,020 which discloses a water-dilutable coating composition comprising specifically selected acrylic copolymers, solvent blends, coloring and/or optical effect pigments and polymer dispersions. To obtain the desired optical effect of the metallic flakes, the correct combination of acrylic copolymer and solvent blend must be achieved. An aqueous thermosetting acrylic resin described by U.S. Patent No. 3,862,071 controls the metallic pigment orientation by the addition of a water insoluble copolymer. Microgel technology as described by GB-PS No. 2,073,609 also results in the proper metal orientation. Also disclosed in DE No. 3,210,051 is an attempt to control metallic pigment orientation using polyurethane dispersions. Cellulosic esters have also been used to control metal fixation as disclosed in DE-A-3,216,549. The rheology modifiers or rheology control agents for water borne coatings have poor shelve stability, poor weathering characteristics and are cumbersome to use. The particular rheology control agent used in this invention results in a non-mottled, high head-on-brightness, outstanding flop, and high quality finish, even in the case of a silver metallic base coat and does not suffer from the problems cited earlier.

The use of acrylic latex resin in a base coat formulation has been disclosed in European Application 0 287 144 Al, however, this application does not disclose any rheology control agents, pigment dispersion procedures, method for aluminum storage and requires that the acrylic latex resin be prepared in 2 or more steps by emulsion polymerization.

Typically, coating compositions used in the automotive market, especially in the automotive after market, are produced by mixing various bases to give the desired color. These coating compositions are then applied in about 1-5 days after preparation. A major problem is the introduction of aluminum flakes which react with water to generate hydrogen gas. Therefore the aluminum flakes must be segregated from the rest of the the water borne components to minimize this hazard. This invention also describes a method for the storage of aluminum flakes in an organic medium with introduction of the flakes direktly into the aqueous environment just prior to application of the coating system. This method minimizes the potential hazard of the aluminum flakes reacting with water to form hydrogen gas and dulling of the aluminum flakes during storage. This method can also be used for the storage of other water sensitive pigments such as copper and brass. Other pigments such as plastic films, mica and coated metallic foils can be stored using this method.

This invention relates to kit compositions for the preparation of waterborne coating compositions comprising
A) a slurry of metallic pigment flakes in a solvent borne water reducible acrylic resin having nonionic and acid functionality and water miscible solvent(s),
B) an aqueous pigmented or unpigmented base containing an acrylic latex resin and,
C) a reducer base containing a rheology control agent.

The present invention also relates to the use of these kit compositions in the refinish market.

Typically, water borne basecoat coating compositions for the refinish market are in kit form. The present invention is concerned with kit compositions for the preparation of waterborne coating compositions, especially for the preparation of waterborne automotive paint base coat compositions containing pigments, metallic pigments, organic solvents, and conventional paint additives. The outstanding metal control exhibited by these coating compositions is attributed to the rheology control agent, the film shrinkage of the acrylic latex vehicle while drying and a wax. The use of acrylic latex results in a very fast dry time. These coating compositions provide base coats that satisfy current and proposed volatile organic compound regulations. Even with conventional nonmetallic pigments, the coatings exhibit excellent appearance.

For the preparation of automotive metallic base coat paints the kit compositions comprise three components; A), B) and C). For the preparation of automotive nonmetallic base coat paints the kit compositions comprise two components; B) and C).

Component A) is a slurry of metallic pigment flakes in a solvent borne water reducible acrylic resin having nonionic and acid functionality and water miscible solvent(s). The acrylic resin used in this component has nonionic and acid functionality allowing for direct introduction of the component into aqueous acrylic latex resin system.

The acrylic resin used in component (A) preferably results from the solution polymerization of ethylenically unsaturated monomers wherein at least two ethylenically unsaturated monomers are acid and poly(ethylene oxide) functional to give a polymer with a glass transition temperature from about -20 to 50°C (using the Fox method of Tg calculation), number average molecular weight of 1,000 to 50,000, an acid number of 5 to 50, a hydroxyl number of 0 - 50, and a final poly(ethylene oxide) level of 1 - 50% by weight, preferably 5 - 20% by weight. The viscosity of the final polymer is 3,000 - 10,000 mPas (cps) with a solids content of 60 - 70% by weight at 23°C.

Preferably component (A) also can contain a solvent borne water reducible acrylic resin having nonionic and acid functionality which is formed by the free radical initiated polymerization of:
a) at least one monomer having acid functionality,
b) at least one monomer having urethane and nonionic functionality prepared by the reaction of:
   1. a capped polyether having a single active hydrogen functionality with a polyisocyanate compound to produce a partially capped isocyanate intermediate which is further reacted with an ethylenically unsaturated compound having at least one active hydrogen group to produce an ethylenically unsaturated compound having urethane and nonionic functionality, or
   2. a capped polyether having a single active hydrogen functionality with a polyisocyanate compound having ethylenically unsaturated functionality to produce an ethylenically unsaturated compound having urethane and nonionic functionality, and
c) at last one ethylenically unsaturated compound.

The solvent borne water reducible acrylic resin used in component (A) also can be prepared by the reaction of an acrylic resin having active hydrogen functionality with an isocyanate adduct having urethane and nonionic functionality. The final resin has a final poly(ethylene oxide) level of 1 - 50% by weight, preferably 5 - 20% by weight. The number average molecular weight of the polymer is between 1,000 and 50,000 atomic mass units, its glass transition temperature (T_{G}) is between -20 and +50°C (calculated by the Fox method), its hydroxyl number is between 0 and 50 and its acid number is between 5 and 50 milligrams of KOH per gram of resin solids. The viscosity of the final polymer is 3,000 - 10,000 mPas (cps) with a solids content of 60 - 70% by weight at 23°C.

Examples of poly(ethylene oxide) functional monomers include poly(ethylene glykol)mono(meth)acrylate (containing 5 to 20 ethylene oxide units) and any other ethylenically unsaturated monomer that contains polyether units.

Monomers having urethane and nonionic functionality can be synthesized by reacting a capped polyether glycol with a multifunctional isocyanate in such a way where the final adduct has one remaining free isocyanate. The capped polyether glycol has the following general formula:

R-O-[CH₂-CH(X)-O]ₙ-H

wherein
- X: represents a monofunctional radical having from 1 to 8 carbon atoms, preferably a hydrogen or a methyl group.
- R: represents a monofunctional, difunctional, trifunctional hydrocarbon radical having 1 to 40 carbons,
- n: represents the numer of moles of ethylene oxide and can range from 0 to 50.

Said capped polyether glycols are known in the art, including polyethylene glycol monomethyl ether,polyethylene glycol monoethyl ether, polyethylene glycol monopropyl ether, polyethylene glycol monobutyl ether, polyethylene glycol nonylphenol ether, polypropylene glycol monomethyl ether, polypropylene glycol monoethyl ether, polypropylene glycol monopropyl ether, and polypropylene glycol monobutyl ether.

The multifunctional isocyanate has the following general formula:

Z-(NCO)ₘ

wherein
- Z: represents a hydrocarbon radical having from 1 to 18 carbon and nitrogen atoms,
- m: represents the number of isocyanate groups.

The organic polyisocyanate which is reacted with the polyether glycol as described is essentially any polyisocyanate and is preferably a diisocyanate, e.g., hydrocarbon diisocyanates or substituted hydrocarbon diisocyanates.Many such organic diisocyantes are known in the art, including p-phenylene diisocyanate, biphenyl 4,4'diisocyanate, toluene diisocyanate, 3,3'-dimethyl-4,4-biphenylene diisocyanate, 1,4-tetramethylene diisocyanate, 1,6-hexamethylene diisocyanate, 2,2,4-trimethylhexane-1,6 diisocyanate, methylene bis (phenyl isocyanate), 1,5 naphthalene diisocyanate, bis(isocyanatoethylfumarate), isophorone diisocyanate (IPDI) and methylene-bis-(4-cyclohexylisocyanate). There can also be employed isocyanate terminated adducts of polyols such as ethylene glycol, or 1,4-butylene glycol, trimethylolpropane etc. These are formed by reacting more than one mole of a diisocyanate, such as those mentioned, with one mole of polyol to form a longer chain diisocyanate.

It is preferred to employ an aliphatic diisocyanate, since it has been found that these provide better color stability in the finished coating. Examples include 1,6-hexamethylene diisocyanate, 1,4-butylene diisocyanate, methylene bis (4-cyclohexyl isocyanate) and isophorone diisocyanate. Mixtures of diisocyanates can also be employed.

Other multifunctional isocyanates can also employed such as 1,2,4-benzenetriisocyanate, polymethylene polyphenyl isocyanate, isocyanurate of isophorone diisocyanate, isocyanurate of hexamethylene diisocyanate.

The adduct may be prepared in conventional manner by reacting a stoichiometric excess of the organic polyisocyanate compound with the appropirate polyether glycol under anhydrous conditions at a temperature between about 20°C to 130°C until the reaction between the isocyanate groups and the active hydrogen group of the polyether glycol is complete. The isocyanate groups and the active hydrogen group of the polyether glycol are allowed to react in such a way that the stoichiometry of the isocyanate group to the active hydrogen groups is 1.5:1 to about 3:1, preferably 2:1. the isocyanate-polyether adduct that is formed has the following general formula:

OCN-Z-[N(H)-C(O)-[O-CH(X)-CH₂]ₙ-O-R]ₘ₋₁

wherein:
- X: represents a monofunctional radical having from 1 to 8 carbon atoms, preferably a hydrogen or a methyl group.
- R: represents a monofunctional, difunctional, trifunctional hydrocarbon radical having 1 to 40 carbons,
- n: represents the number of moles of ethylene oxide and can range from 0 to 50.
- Z: represents a hydrocarbon radical having from 1 to 18 carbon and nitrogen atoms,
- m: represents the number of isocyanate groups.

The reaction between the isocyanate group and the active hydrogen group of the polyether glycol may also be catalyzed. Examples of such catalyst are dibutyltin dilaurate, dibutyltin diacetate, 1,4-diaza(2,2,2)bicyclooctane, tetramethylbutanediamine, zinc octoate and stannous octate. Solvents used must be nonreactive toward the isocyanate and also be water miscible. Examples of solvents meeting these requirments are acetone, methylethylketone, dimethylformamide, N-methylpyrrolidone, ethylene glycol diacetate and propylene glycol diacetate.

The urethane-polyether monomer is prepared in convential manner by reacting an equal stoichometric amount of an ethylenically unsaturated compound having active hydrogen groups. The general formula for this ethylenically unsaturated compound is as follows:

CH₂=CH(X)-R'-R"-O-H

wherein:
- X: represents a monofuctional radical having from 1 to 8 carbon atoms, preferably a hydrogen or methyl group,
- R': represents a radical being a carboxyl, aliphatic, or aryl, preferably carboxyl,
- R": represents a hydrocarbon radical having from 1 to 40 carbon atoms.

Examples of hydroxy functional ethylenically unsaturated monomers are hydroxyethyl (meth)acrylate, hydroxypropyl (meth)acrylate, hydroxybutyl (meth)acrylate, sec-hydroxybutyl (meth)acrylate, and hydroxyoctyl (meth)acrylate.

The urethane-polyether monomer must be prepared under anhydrous conditions at a temperature between about 20°C to 130°C until the reaction between the isocyanate and the urethane-polyether adduct is complete. Any residual isocyanate may be destroyed by reaction with a mono functional active compound. Examples of such coupounds are methanol, ethanol, propanol, iso-propanol, butanol and heptanol. The reaction between the isocyanate and the active hydrogen compound may also be catalyzed. Examples of catalysis are dibutyltin dilaurate, dibutyltin diacetate, 1,4-diaza 2,2,2)bicyclooctane, tetramethylbutanediamine, zinc octoate and stannous octoate. Solvents used for this reaction must be anhydrous and nonreactive toward the isocyanate group. Examples of such solvents are acetone, methylethyl ketone, dimethyl formamide, N-methylpyrrolidone, ethylene glycol diacetate, and propylene glycol diacetate. A free radical inhibitor can also be present in the reaction mixture. The preferred inhibitor is butylated hydroxy toluene.

The ethylenically unsaturated polyether-urethane containing monomer also can be synthesized by reacting a capped polyether glycol with a radical having isocyanate and ethlenically unsaturated functionality in such a way where the final urethane-polyether monomer has ethlenically unsaturated functionality for free radical polymerization. The capped polyether glycol has the following general formula:

R-O-[CH₂-CH(X)-O]ₙ-H

wherein
- X: represents a monofunctional radical having from 1 to 8 carbon atoms, preferably a hydrogen or a methyl group.
- R: represents a monofunctional, difunctional, trifunctional hydrocarbon radical having 1 to 40 carbons,
- n: represents the number of moles of ethylene oxide and can range from 0 to 50.

The multifunctional isocyanate has the following general formula:

CH₂=CH(X)-Z-(NCO)ₘ

wherein
- Z: represents a hydrocarbon radical having from 1 to 18 carbon and nitrogen atoms,
- m: represents the number of isocyanate groups.
- X: represents a monofunctional radical having from 1 to 8 carbon atoms, preferably a hydrogen or a methyl group.

The organic polyisocyanate which is reacted with the polyether glycol as described is essentially any polyisocyanate and is preferably a monoisocyanate with ethylenically unsaturated functionality. The prefered isocyanate compound having ethylenically unsaturated functionality, is meta-isopropenyl-alpha, alpha-dimethylbenzylisocyanate. The urethane-polyether monomer may be prepared in conventional manner by reacting a stoichiometric excess of the organic polyisocyanate compound with the appropirate polyether glycol under anhydrous conditions at a temperature between about 20°C to 130°C until the reaction between the isocyanate groups and the active hydrogen group of the polyether glycol is complete. The isocyanate groups and the active hydrogen group of the polyether glycol are allowed to react in such a way that the stoichiometry of the isocyanate group to the active hydrogen groups is 1.0:0.8 to about 1:1, preferably 1:1.

The reaction between the isocyanate group and the active hydrogen group of the polyether glycol may also be catalyzed. Examples of such catalyst are dibutyltin dilaurate, dibutyltin diacetate, stannous octate, 1,4-diaza(2,2,2)bicyclooctane, tetramethylbutanediamine, stannous and zinc octoate. Solvents used must be nonreative toward the isocyanate and also be water miscible. Examples of solvents meeting these requirements are acetone, methylethylketone, dimethylformamide, N-methylpyrrolidone, ethylene glycol diacetate and propylene glycol diacetate. A free radical inhibitor can also be present in the reaction mixture. The prefered inhibitor is butylated hydroxy toluene.

The final aluminum dispersion resin is an acrylic polymer in water miscible solvent(s), formed by the free radical initiated polymerization of ethylenically unsaturated monomers including the polyether containg monomer and/or the urethane-polyether monomer previously described.

Examples of ethylenically unsaturated monomers which can be used for this purpose include alkyl (meth)acrylates such as methyl (meth)acrylate, ethyl (meth)acrylate, propyl (meth)acrylate, 2-propyl (meth)acrylate, butyl (meth)acrylate, 2-butyl (meth)acrylate, 2-methylpropyl (meth)acrylate, t-butyl (meth)acrylate, 2-ethylhexyl (meth)acrylate, cyclohexyl (meth)acrylate, lauryl (meth)acrylate, octyl (meth)acrylate, decyl (meth)acrylate, stearyl (meth)acrylate, dicyclopentadienyl (meth)acrylate, and isobornyl (meth)acrylate; aryl monomers such as styrene, alpha-methyl styrene, vinyl toluene, t-butyl styrene, benzyl (meth)acrylate, and 2-benzylethyl (meth)acrylate; hydroxy monomers such as hydroxyethyl (meth)acrylate, hydroxypropyl (meth)acrylate, allyl alcohol, hydroxybutyl (meth)acrylate, sechydroxybutyl (meth)acrylate, and hydroxyoctyl (meth)acrylate; acid functional monomers such as acrylic acid, methacrylic acid, maleic acid, and itaconic acid.

The acrylic polymer is prepared in organic solvents that are water miscible, such as methyl ethyl ketone, acetone, ethanol, methanol, propanol, butanol, N-methylpyrrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether, methyl ethyl ketone and dipropylene butyl ether. The acrylic polymer is prepared via normal solution polymerization techniques. Examples of free-radical initiators include peroxides, such as benzoyl peroxide, tertiary-butyl peracetate, tertiary-butyl peroctoate, tertiary-butyl perbenzoate, and di-tertiary butyl peroxide; and 1,1'-azobis(alkyl nitrile)s, such as , '-azobis (isobutyronitrile), and 1,1'-azobis(cyclohexane carbonitrile). Optionally, surfactants can also be present during the polymerization at a level of 0.1-2.0% by weight.

The novel water reducible acrylic resin having nonionic, urethane and acid functionality also can be synthesized by the free-radical initiated polymerisation of α,β-ethylenically unsaturated monomers, to form an acrylic polymer, having active hydrogen functionality followed by grafting of a diisocyanate / polyether adduct onto the acrylic polymer, to give a final poly(ethylene oxide) level of 1-50 % by weight, preferable 5 % to 20 % by weight.The number average molecular weight of the polymer is between 1,000 and 50,000, preferably between 1,000 and 20,000 atomic mass units, its Glass Transition Temperature (Tg) is between -20 ° and +50 °C (calculated by the Fox method), its hydroxyl number 0 to 50 and its acid number is from 5 to 50, preferable from 10 to 20 miligrams of KOH per gram of resin solids.The viscosity of this polymer is between 5,000 and 15,000 cps at non-volatile by weight, measured at 25 °C.

The active hydrogen functional acrylic polymer is synthesized in water miscible solvent(s), formed by the free radical initiated polymerization of ethylenically unsaturated monomers which include acitve hydrogen and acid functionality. The final acrylic resin should have a number average molecular weight of between 1,000 and 20,000 atomic mass units, a Glass Transition Temperature (Tg) of between -20° and +50° C (calculated by the Fox method), a hydroxyl number of from 0 to 75 and a acid number of from 10 to 20 milligrams of KOH per gram of resin solids. The viscosity of this polymer is between 5,000 and 15,000 cps at 66% non-volatile by weight, measured at 25 °C.

Examples of ethylenically unsaturated monomers which can be used for this purpose include alkyl (meth)acrylates such as methyl (meth)acrylate, ethyl (meth)acrylate, propyl (meth)acrylate, 2-propyl (meth)acrylate, butyl (meth)acrylate, 2-butyl (meth)acrylate, 2-methylpropyl (meth)acrylate, t-butyl (meth)acrylate, 2-ethylhexyl (meth)acrylate, cycloheptyl (meth)acrylate, lauryl (meth) acrylate, octyl (meth)acrylate, decyl (meth)acrylate, stearyl (meth)acrylate, dicyclopentadienyl (meth)acrylate, and isobornyl (meth)acrylate; aryl monomers such as styrene, alpha-methyl styrene, vinyl toluene, t-butyl styrene, benzyl (meth)acrylate, and 2-benzylethyl (meth)acrylate; ethylenically unsaturated compounds having at last one active hydrogen group such as, hydroxy monomers such as hydroxyethyl (meth)acrylate, hydroxypropyl (meth)acrylate, hydroxybutyl (meth)acrylate, sechydroxybutyl (meth)acrylate, and hydroxyoctyl(meth)acrylate; acid functional monomers such as acrylic acid, methacrylic acid, maleic acid, and itaconic acid.

The acrylic polymer is prepared in organic solvents that are water miscible, such as methyl ethyl ketone, acetone, ethanol, methanol, propanol, butanol, N-methylpyrrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether, methyl ethyl ketone and dipropylene butyl ether. The acrylic polymer is prepared via normal solution polymerization techniques. Examples of free-radical initiators include peroxides, such as benzoyl peroxide, tertiary-butyl peracetate, tertiary-butyl peroctoate, tertiary-butyl perbenzoate, and di-tertiary butyl peroxide; and 1,1'-azobis(alkyl nitrile)s, such as , ' -azobis(isobutyronitrile), and 1,1'-azobis(cyclohexane carbonitrile). Optionally, surfactants can also be present during the polymerization at a level of 0.1-2.0% by weight.

The monoisocyanate/polyether urethane adduct is synthesized by reacting a capped polyether glycol with a multifunctional isocyanate in such a way where the final adduct has one remaining free isocyanate. The capped polyether glycol has the following general formula:

R-O-[CH₂-CH(X)-O]ₙ-H

wherein
- X: represents a monofunctional radical having from 1 to 8 carbon atoms, preferably a hydrogen or a methyl group.
- R: represents a monofunctional, difunctional, trifunctional hydrocarbon radical having 1 to 40 carbons,
- n: represents the number of moles of ethylene oxide and can range from 0 to 50.

The capped polyether has a molecular range of 100 to 4,000. Examples of capped polyether which can be used include polyethylene glycol monomethyl ether, polyethylene glycol monoethyl ether, polyethylene glycol monopropyl ether, polyethylene glycol monobutyl ether, polyethylene glycol nonylphenol ether, polypropylene glycol monomethyl ether, polypropylene glycol monoethyl ether, polypropylene glycol monopropyl ether, and polypropylene glycol monobutyl ether.

The multifunctional isocyanate has the following general formula:

Z-(NCO)ₘ

wherein:
- Z: represents a hydrocarbon radical having from 1 to 18 carbon and nitrogen atoms,
- m: represents the number of isocyanate groups.

The organic polyisocyanate which is reacted with the polyether glycol as described is essentially any polyisocyanate and is preferably a diisocyanate, e.g., hydrocarbon diisocyanates or substituted hydrocarbon diisocyanates.Many such organic diisocyantes are known in the art, including p-phenylene diisocyanate, biphenyl 4,4'diisocyanate, toluene diisocyanate, 3,3'-dimethyl-4,4-biphenylene diisocyanate, 1,4-tetramethylene diisocyanate, 1,6-hexamethylene diisocyanate, 2,2,4-trimethylhexane-1,6 6 diisocyanate, methylene bis (phenyl isocyanate), 1,5 naphthalene diisocyanate, bis(isocyanatoethylfumarate), isophorone diisocyanate (IPDI) and methylene-bis-(4-cyclohexylisocyanate). There can also be employed isocyanate terminated adducts of polyols such as ethylene glycol, or 1,4-butylene glycol, trimethylolpropane etc. These are formed by reacting more than one mole of a diisocyanate, such as those mentioned, with one mole of polyol to form a longer chain diisocyanate.

It is preferred to employ an aliphatic diisocyanate, since it has been found that these provide better color stability in the finished coating. Examples include 1,6-hexamethylene diisocyanate, 1,4-butylene diisocyanate, methylene bis(4-cyclohexyl isocyanate) and isophorone diisocyanate. Mixtures of diisocyanates can also be employed.

Other multifunctional isocyanates can also employed such as 1,2,4-benzenetriisocyanate, polymethylene polyphenyl isocyanate, isocyanurate of isophorone diisocyanate, isocyanurate of hexamethylene diisocyanate.

The adduct may be prepared in conventional manner by reacting a stoichiometric excess of the organic polyisocyanate compound with the appropirate polyether glycol under anhydrous conditions at a temperature between about 20°C to 130°C until the reaction between the isocyanate groups and the active hydrogen group of the polyether glycol is complete. The isocyanate groups and the active hydrogen group of the polyether glycol are allowed to react in such a way that the stoichiometry of the isocyanate group to the active hydrogen groups is 1.5:1 to about 3:1, preferably 2:1.

The reaction between the isocyanate group and the active hydrogen group of the polyethylene glycol may also be catalyzed. Examples of such catalyst are dibutyltin dilaurate, dibutyltin diacetate, 1,4-diaza(2,2,2)bicyclooctane, tetramethylbutanediamine, zinc octoate and stannous octate. Solvents used must be nonreactive toward the isocyanate and also be water miscible. Examples of solvents meeting these requirements are acetone, methylethylketone, dimethylformamide, N-methylpyrrolidone, ethylene glycol diacetate and propylene glycol diacetate.

The final water reducible resin having nonionic, urethane and acid functionality is prepared by reacting the monoisocanate/ polyether urethane adduct with the active hydrogen functional acrylic polymer in a convential manner under anhydrous conditions at a temperature between 20°C to 130°C until the reaction between the isocyanate groups and the active hydrogen group of the acrylic is complete. The stoichiometry of the isocyante group of the adduct to the active hydrogen groups of the acrylic resin is 0.1:1.0 to 1.0:1.0. The final polymer should have a final poly(ethylene oxide) level of 1 to 50 % by weight, preferably 5 % to 20 % by weight. The number average molecular weight of the polymer is between 1,000 and 50,000 atomic mass units, its Glass Transition Temperature (Tg) is between -20°C and +50°C (calculated by the Fox method), its hydroxyl number is from 0 to 50 and its acid numver is from 5 to 50, preferably 10 to 20 milligrams of KOH per gram of resin solids. The viscosity of this polymer is between 5,000 and 15,000 cps at 66 % nonvolatile by weight, measured at 25°C.

Any commercial aluminum paste available for solvent borne or water borne applications can be used in the preparation of component A. The amount of aluminum flake in the component is 4-30% by weight, preferably 23-30% by weight.

Other nonmetallic and metallic pigments that can be incorporated into this base include copper, copper alloys, mica, coated metallic foils, plastic flakes and steel. However, this is not an inclusive list.

Additional organic solvent may be needed to reduce the viscosity of the acrylic resin. Acceptable solvents must be water miscible such as methyl ethyl ketone, acetone, ethanol, methanol, propanol, butanol, N-methylpyrrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether and dipropylene butyl ether. Component A, the aluminum base, has a total solids level of 25-55 % by weight, 5-35 %, preferably 20-30 %, binder by weight, 35-50% organic solvent by weight and total metallic pigment level of 4-30% by weight. Additional wetting, anti-settling additives common to the paint industry may be added.

The preparation of component A, the aluminum base, is critical for the proper appearance of the aluminum flake in the final coating. The proper amount of the acrylic resin solution is dissolved into the proper amount of water miscible organic solvent, such as methyl ethyl ketone, acetone, ethanol, methanol, propanol, butanol, N-methylpyrrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether and dipropylene butyl ether. The proper amount of the aluminum paste is slurred into the above described resin solution. The aluminum slurry must be stirred until the base is smooth and uniform.

By binder we mean the nonvolatile portion of the resinous vehicle of a coating, in particular reference is given to Paint & Coatings Dictonary, Published by The Federation of Societies for Coatings Technology, 1978. By solids we mean the nonvolatile matter in a coating composition left behind after drying, in particular reference is given to Paint & Coatings Dectonary, Published by the Federation of Societies for Coatings Technology, 1978.

Component B, pigmented or unpigmented base, contains optionally acrylic latex grinding polymer and acrylic latex film forming vehicle at a level of 5-50%, preferably 15-50%. This level depends on the pigment in the component. The level of pigment in component B is 0-35% by weight, this level depends on the pigment characteristics also. Typically, a pigment to binder weight ratio of about 10/100 to 300/100 is acceptable. The pigments are typically ground using conventional dispersion equipment such as sand mills, pearl mills, ball mills, horizonal mills, and vertical mills. Optional wetting agents, surfactants, and dispersing aids can be employed. This component may also contain a wax composed of ethylene and/or ethylenically unsaturated monomers alkyl (meth)acrylates such as methyl (meth)acrylate, ethyl (meth)acrylate, propyl (meth)acrylate, 2-propyl (meth)acrylate, butyl (meth)acrylate, 2-butyl(meth)acrylate, 2-methylpropyl (meth)acrylate, t-butyl (meth)acrylate, 2-ethylhexyl (meth)acrylate, cyclohexyl (meth)acrylate, lauryl (meth)acrylate, octyl (meth)acrylate, decyl (meth)acrylate, stearyl (meth)acrylate, dicyclopentadienyl (meth)acrylate, and isobornyl (meth)acrylate; aryl monomers such as styrene, alpha-methyl styrene, vinyl toluene, t-butyl styrene, benzyl (meth)acrylate, and 2-benzylethyl (meth)acrylate; hydroxy monomers such as hydroxyethyl (meth)acrylate, hydroxypropyl (meth)acrylate, hydroxybutyl (meth)acrylate, sec-hydroxybutyl (meth)acrylate, and hydroxyoctyl (meth)acrylate; acid functional monomers such as acrylic acid, methacrylic acid, maleic acid, and itaconic acid. Typically, the particle size of the wax particle in the final dispersion is 0.5 microns to 50 microns, preferably 1.0 to 20.0 microns. The wax is dispersed by conventional techniques or emulsified into the resin system to the desired particle size. The proper amount of the wax dispersion is then added to the pigmented or unpigmented base. The pH of the pigmented or unpigmented base can be adjusted using ammonia or any water soluble primary amines, secondary amines, tertiary amines, polyamines and hydroxyamines, such as ethanolamine, diethanolamine, triethanolamine, n-methylethanol amine, N,N diethylethanolamine, N-aminoethanolamine, N-methyldiethanolamine, monoisopropanolamine, diisopropanolamine, triisopropanolamine, hydroxyamine, butanolamine, hexanolamine, methyl diethanolamine, N,N-diethylaminoethylamine, ethylene diamine, diethylene triamine, diethylene tetraamine, hexamethylene tetramine, triethylamine and the like. The prefered base is ammonia. This component may also contain a water dipersible polyurethane resin at a level of 0-25% by weight.

The resin used for the dispersing of the pigments is an acrylic latex. Typical properties of this acrylic latex are as follows:

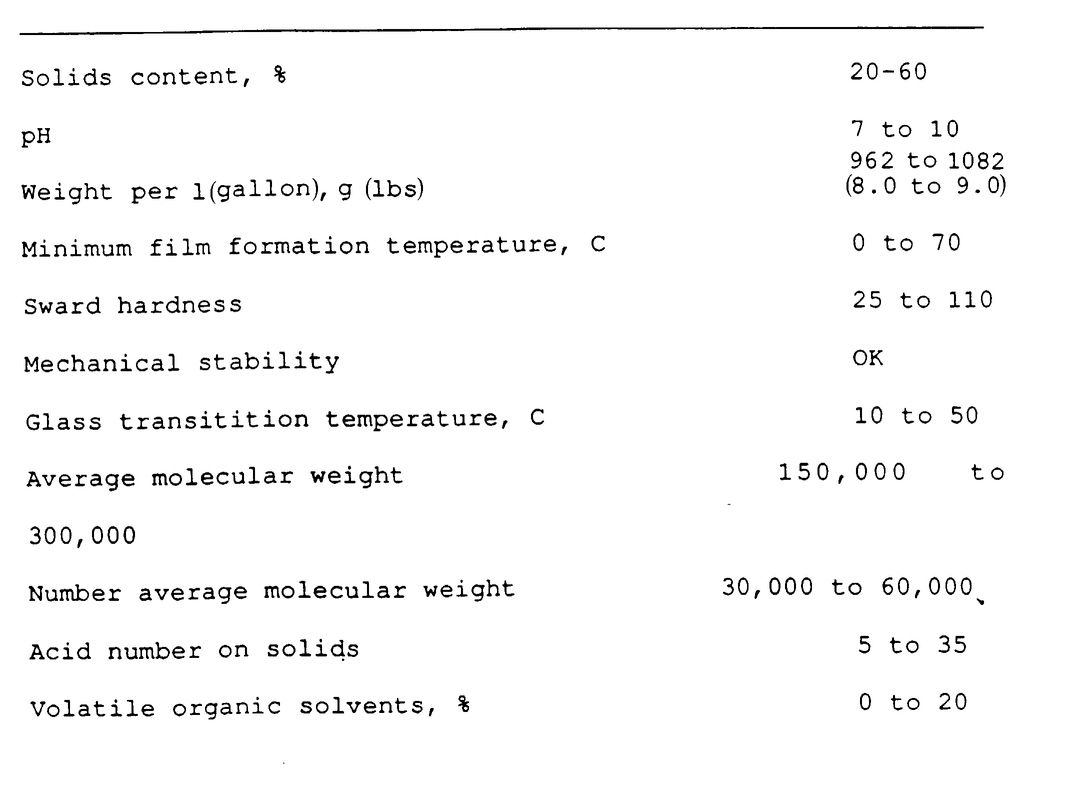

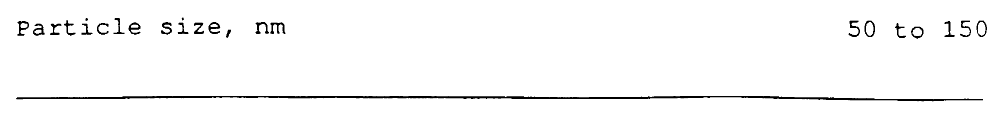

Especially preferred acrylic lattices are Neocryl A-622, Neocryl A-640, Neocryl A-6037 sold by ICI Resins, Joncryl J-537, Joncryl J-538 sold by Johnson Wax, Arolon 860-W-45 sold by NL Industries. The level of this resin in component B is 15-60% by weight, preferably 20-40% by weight. The organic, inorganic pigments and/or dyestuffs are ground with this resin employing standard techniques. Examples of dispersing equipment are ball mills, pebble mills, pearl mills, horizontal mills, and vertical mills. Examples of pigments and dyestuffs but not limited to are titanium dioxide, graphite, carbon black, zinc oxide, cadmium sulfide, chromium oxide, zinc sulfide, zinc chromate, strontium chromate, barium chromate, lead chromate lead cyanamide, lead silico chromate, chromium oxide, zinc sulfide, yellow nickel titanium, yellow chromium titanium, red iron oxide, yellow iron oxide, transparent red iron oxide, transparent yellow oxide, black iron oxide, naphthol reds and browns, anthraquinones, dioxazine violet, isoindoline yellows, arylide yellow and oranges, ultramarine blue, phthalocyanine complexes, amaranth, quinacridones, halogenated thioindigo pigments and extender pigments such as magnesium silicate, aluminum silicate, calcium silicate, calcium carbonate, fumed silica, barium sulfate, among others. The level of pigment/dyestuff in component B is 0.0-45.0% by weight, typically 0-25%. This component may also contain a wax composed of ethylene and/or ethylenically unsaturated monomers alkyl (meth)acrylates such as methyl (meth)acrylate, ethyl (meth) acrylate, propyl (meth)acrylate, 2-propyl (meth)acrylate, butyl (meth)acrylate, 2-butyl (meth) acrylate, 2-methylpropyl (meth) acrylate, t-butyl (meth)acrylate, 2-ethylhexyl (meth)acrylate, cyclohexyl (meth) acrylate, lauryl (meth) acrylate, octyl (meth) acrylate, decyl (meth)acrylate, stearyl (meth)acrylate, dicyclopentadienyl (meth)acrylate, and isobornyl (meth)acrylate; aryl monomers such as styrene, alpha-methyl styrene, vinyl toluene, t-butyl styrene, benzyl (meth)acrylate, and 2-benzylethyl (meth)acrylate; hydroxy monomers such as hydroxyethyl (meth)acrylate, hydroxypropyl (meth)acrylate, hydroxybutyl (meth)acrylate, sechydroxybutyl (meth)acrylate, and hydroxyoctyl (meth)acrylate; acid functional monomers such as acrylic acid, methacrylic acid, maleic acid, and itaconic acid. Typically, the particle size of the wax particle in the final dispersion is 0.5 micron to 50 micron, preferably 1.0 micron to 2.0 micron. Typical the wax contain 0 - 20 % by weight vinyl acetate. Typical properties of this wax are as follows:

| | |
|---|---|
| Acid Number (mg KOH/g) | 0-50 |
| Hardness, dmm (ASTM D-5) | <2.0 |
| Mettler Drop Point, C (ASTM D-3104) | 100-150 |
| Particle Size, µm (micron) | 0.5-10.0 |
| Hydroxyl Number | 0-50 |

Typically, the wax is dispersed by conventional techniques in to the resin system to the desired particle size or be prepared by emulsion techniques. The proper amount of the wax dispersion is then added to the pigmented base. This component may also contain other conventional paint additives such as dispersing aids, anti-settling aids, wetting aids, thickening agents, extenders, plasticizers, stabilizers, light stabilizers, antifoams, defoamers and catalysts singly or a multitude of them at the conventional levels. Also present in this component is a water miscible solvent such as methyl ethyl ketone, acetone, ethanol, methanol, propanol, butanol, N-methylpyrrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether and dipropylene butyl ether at a level of 0-25% by weight, preferably 0-12% by weight. Examples of water reducible polyurethanes are NeoRez R-960, R-966, R-967, R-9637 manufactured by ICI Resins and Spensol L51 and L53 manufactured by NL Industries.

Component B, the pigmented base, has a total solids level of 5-60% by weight, a total pigment level of 0.0-45% by weight, a total organic solvent level of 0-25% by weight, a total binder level of 20-60% by weight, a total wax level of 0-20% by weight, a total polyurethane level of 0-25% by weight, a total water level of 40 - 95 % by weight and a pH range of 7 - 10, preferably 7 - 9. The pH of the base can be adjusted using ammonia or other water soluble primary amines, secondary amines, tertiary amines, polyamines and hydroxyamines, such as ethanolamine, diethanolamine, triethanolamine, N-methylethyanolamine,N,Ndiethylethanolamine, N-aminoethanolamine, N-methyldiethanolamine, monoisopropanolamine, diisopropanolamine, triisopropanolamine, hydroxyamine, butanolamine, hexanolamine, methyl diethanolamine, N,N-diethylaminoethylamine, ethylene diamine, diethylene triamine, diethylene tetraamine, hexamethylene tetramine, triethylamine and the like.

Component C, reducer base, is an aqueous solution containing a dispersion of synthetic sodium lithium magnesium silicate hectorite clay, a polypropylene glycol and/or an anionic surfactantand optionally a water reducible polyurethan resin. Addition of a polypropylene glycol to the hectorite clay results in a low viskosity dispersion. The low viscosity dispersion of the hectorite clay allows for easy incorportion of the dispersion into the paint composition and allows the coating to be applied wetter during the application process. The polypropylene glycol also allows the coating to be sprayed wetter onto the substrate. Addition of the anionic surfactant results in the pregelling of the hectorite clay. Using the pregelled hectorite clay in a coating composition results in a drier film application and astable viscosity. The typical properties of the synthetic sodium lithium magnesium silicate clay are as follows:

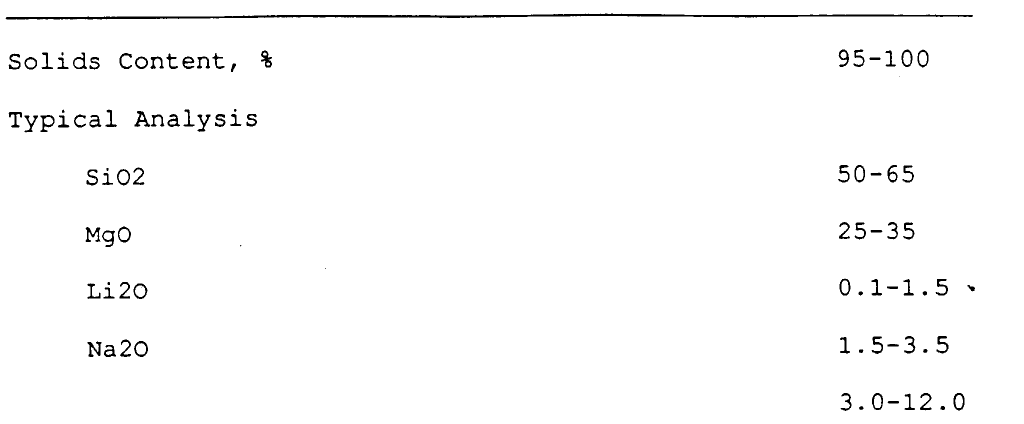

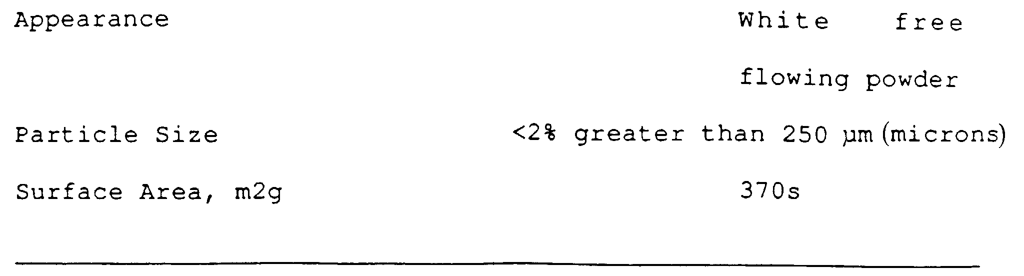

Especially preferred synthetic sodium lithium magnesium silicate hectorite clay is Laponite RD, available from Laporte, Inc. This hectorite clay is present in this component at a level of 0.1-10% by weight, preferably 0.5-3.0% by weight. This component also contains a polypropylene glycol at a level of 0.1 - 10 % by weight and/or an anionic surfactant at a level of 0.1 - 2.0 % by weight, preferably 0.1 - 1.0 % by weight. The molecular weight range of the polypropylene glycol is 435 to 3900. Examples of anionic surfactants that can be employed are alcohol sulfated, ether sulfated, linear alkyl benzene sulfonates and specially preferred dialkyl sulfosuccinates. The cation of the salt may be ammonium, sodium, potassium, and other monovalent and/or divalent metals. This component may also contain a water reducible polyurethane at a level of 0.0 - 25.0 % by wegiht, preferably 0.0 - 10.0 % by weight. Examples of water reducible polyurethanes are NeoRez R-960, R-966, R-967, R-9637 manufactured by ICI Resins and Spensol L51 and L53 manufactured by NL Industries

The hectorite clay can be dispersed in the aqueous medium by Cowles or agitation. A water miscible solvent may also be present in this component such as methyl ethyl ketone, acetone, ethanol, methanol, propanol, butanol, N-methylpyrolidone, glycols, glycol ethers, glycol acetates, diethylene glycol ethers, diethylene glycol acetates, propylene glycol ethers, propylene glycol acetates, dipropylene glycol ethers, dipropylene glycol acetates, specially preferred are ethylene glycol propyl ether, ethylene glycol butyl ether, ethylene glycol hexyl ether, propylene methyl ether, propylene ethyl ether, propylene propyl ether, propylene butyl ether, propylene hexyl ether, dipropylene methyl ether, dipropylene ethyl ether, dipropylene propyl ether and dipropylene butyl ether at a level of 0-25% by weight, preferably 0-12% by weight. The total water content of this component is 50 - 99,9 % by weight

Other water reducible resins may be added to the coating to improve certain film properties such as aqueous one-component aliphatic polyurethane dispersions, aromatic polyurethane dispersions, polyesters, and alkyds.

Addition of an acrylic acid and/or polyurethane based thickeners known to the art may also be added to achieve desired properties. The incorporation of metal oxides such as zinc oxide may also improve the humidity resistance of the final film.

Additional anionic and nonionic surfactants can be added to the paint composition to increase wetting of the substrate by the coating such as FC-120, FC-430 sold by 3M, Surfynol 104, Surfynol 440 sold by Air Products, Triton X-100 sold by Rohm and Haas, Troysol LAC sold by Troy Chemical Company, Aerosol OT's sold by American Cyanamid including the salts of dialkyl sulfosuccinates and Igepal's sold by GAF including the ethoxylated alkyl phenols.

This base coat composition exhibits a very high viscosity at low shear rate while having a low viscosity at high shear rates. This phenomenon results in the outstanding metal effect this coating composition possesses. The efflux time of the coating through a #4 Ford cup is 15 to 30 seconds at 23°C. Using the component B and component C nonmetallic automotive base coat kit compositions can be produced. The coating composition can be applied using conventional spray equipment or high volume low pressure spray equipment resulting in a high quality finish. Other modes of application are roller coating, brushing, sprinkling, flow coating, dipping, electrostatic spraying, or electrophoresis. Suitable substrates may be made of wood, metal, and synthetic material. After a flash off time of 15 to 45 minutes, a transparent top coat can be applied over this base coat. The preferred transparent clear coat is two component, based on acrylic and/or polyester resins cured with polyisocyanates. Other examples of cured transparent clear coats are acrylic and/or polyester resins cured with silanes, acrylic and/or polyester acid cured epoxy coatings, and acrylic and/or polyester resins cured with aminoplast resins, such as melamine resins, however, this is not an inclusive list.

### PREFERRED EMBODIMENTS OF INVENTION

The following examples illustrate the invention without limiting the scope thereof.

### Example 1: Base Coat Preparation

In a 1-liter distillation flask, fitted with a water-cooled condenser and a dry air-sparge tube, under a dry air atmosphere, 177.8 grams of isophorone diisocyanate is combined with 422.4 grams of Methoxy Polyethylene Glycol of the formula: CH₃O-(CH₂CH₂O)ₙ-H (molecular weight = 550), 10 grams of Urethane Grade Methyl Ethyl Ketone, and 12 grams of a 0.5% solution of Butylated Hydroxy Toluene in Urethane Grade Methyl Ethyl Ketone. The mixture is then stirred for 5 minutes at ambient temperature, and 0.2 grams of dibutyltin diacetate is added. The mixture is continuously stirred, and heated as necessary, to maintain a temperature of 60° C for two hours. The mixture is then cooled to less than 30° C, and 96.5 grams of Hydroxyethyl Acrylate is added. The mixture is continuously stirred, and heated as necessary, to maintain a temperature of 60° C for two hours. Any residual isocyanate (as determined by Infrared Spectroscopy) should be reacted with a minimum amount of anhydrous ethanol. The product can be sealed in a dried glass bottle.

Approximately 134 grams of Propylene glycol monopropyl ether is combined with 5 grams of Methyl Ethyl Ketone in a one-liter distillation flask, fitted with a water-cooled condenser, under a Nitrogen blanket. The mixture is brought to reflux (~140° C), the Nitrogen flow reduced to a minimum, and a mixture of α,β-ethylenically unsaturated monomers is pumped into the flask over two hours. The monomer mixture consists of Methyl Methacrylate - 7.3%, Styrene - 18.9%, n-Butyl Methacrylate - 47.9%, Acrylic Acid - 1.6%, 2-Ethylhexyl Acrylate - 2.4%, and Polyether Monomer (described above) - 22.0%. While the monomers are being pumped into the reaction flask, a mixture of 10.6 grams of free-radical initiator (t-Butyl Perbenzoate) and 50 grams solvent (propylene glycol monopropyl ether) is simultaneously fed into the flask over two hours.

After adding all the monomers, solvent, and initiator (and flushing the pumps and feed lines with propylene glycol monopropyl ether), the reaction is held at reflux. After thirty minutes at reflux, a mixture of 1.2 grams of initiator and 35 grams of solvent (propylene glycol monopropyl ether) is pumped into the reaction flask over ten minutes. After adding the initiator and solvent mixture, the reaction is held at reflux. After one to two hours at reflux, the reaction is cooled and filtered into a lined metal can. The viscosity of this polymer is between 2,500 and 4,500 mPas (cps) at 66.2% non-volatile by weight, measured at 25 °C, and its acid number is from 12.5 to 14.5 milligrams of KOH per gram of resin solids.

### Preparation of Component A - Aluminum Base

A commerical solvent borne aluminum paste, 60.0g, was added to 60.0g of butoxyethanol. The mixture was stirred until a homogeneous dispersion was produced. To this dispersion, 30.0g, of the resin described above was added to the dispersion and the entire mixture stirred until a smooth, uniform slurry was produced. This aluminum base contains 39% volatile organic solvent by weight, a soldis level of 61.0% by weight, a binder level of 13% by weight and an aluminum flake level of 26.0% by weight.

### Preparation of Component B - Pigmented Base

The following pigment slurry was prepared, 12.2g of NeoCryl A-6037, 14.8g of NeoCryl A-640, 0.3g of 30% aqueous ammonia, 3.2g of Perrindo Maroon R-6424 manufactured by Mobay Corporation, 0.lg of a defoamer and 0.05g of Surfynol 104BC manufactured by Air Products. The above mixture were mixed together and predispersed using a Cowles blade. The mixture was then ground on a sand mill until the desired particle size was achieved. A let down solution containing 29.5g of NeoCryl A-622, 2.6g of butoxyethanol, 1.3g of deionized water and 0.03g of 1% aqueous solution of FC-120 was added to the grind portion under agitation. An unpigmented base can be prepared using the procedure above with the elimination of the Perrindo Maroon R-6424 pigment. A wax dispersion was prepared by grinding 50.0g of a wax, 50.0g of unpigmented resin solution, 50.0 g of deionized water and 50.0g of butoxyethanol. This paste was ground to the desired particle size using conventional techniques. To the pigmented and unpigmented bases described above, 6.0g of this wax dispersion was added with stirring. Also added to the pigmented and unpigmented bases describee above was 16.0g of NeoRez R-9637 manufactured by ICI Resins. The resulting pigmented base had a pH of 8.4, a solids level of 38.1% by weight, a volatile organic level of 10.5% by weight, a binder level of 34.2% by weight, a pigment level of 4.3% by weight and a water level of 51.4% by weight. The unpigmented base has a solid level of 35.4% by weight, volatile organic level of 9.5% by weight, a water level of 55.1% by weight and a pH of 8.5.

### Preparation of Component C - Reducer Base

To 1953.2g of deionized water, 31.3g of Laponite RD manufactured by Laporte Industries and 10.7g of Pluracol P1010 manufactured by BASF Corporation was added. The resulting solution was then agitated for one hour until the Laponite RD was completely dispersed. To this solution was added 1953.2g of deionized water. The resulting mixture had a Laponite RD level of 0.79% by weight and a polypropylene glycol level of 0.27% by weight.

### EXAMPLE 2 - PREPARATION OF A WATER BORNE RED METALLIC BASE COAT

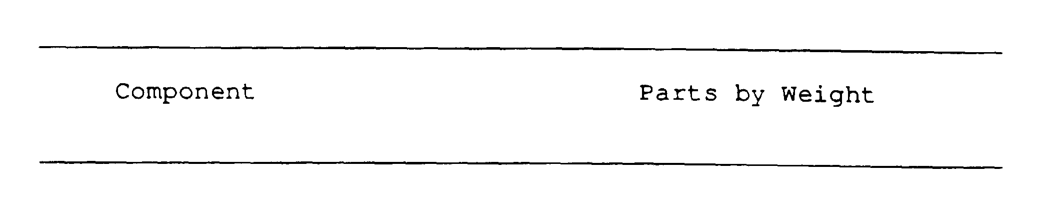

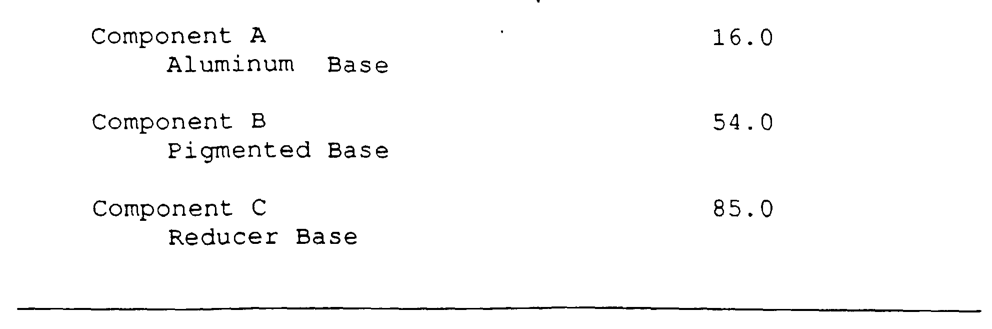

The above formula was used to prepare a red metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventual polyurethane clear coat are listed below, including appearance ratings.

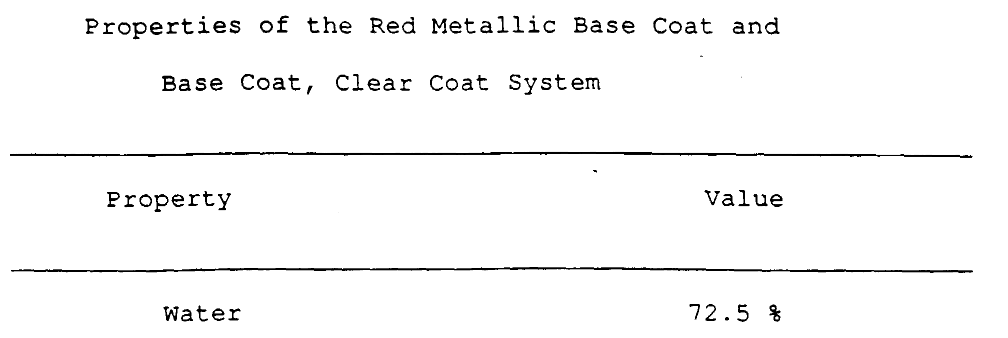

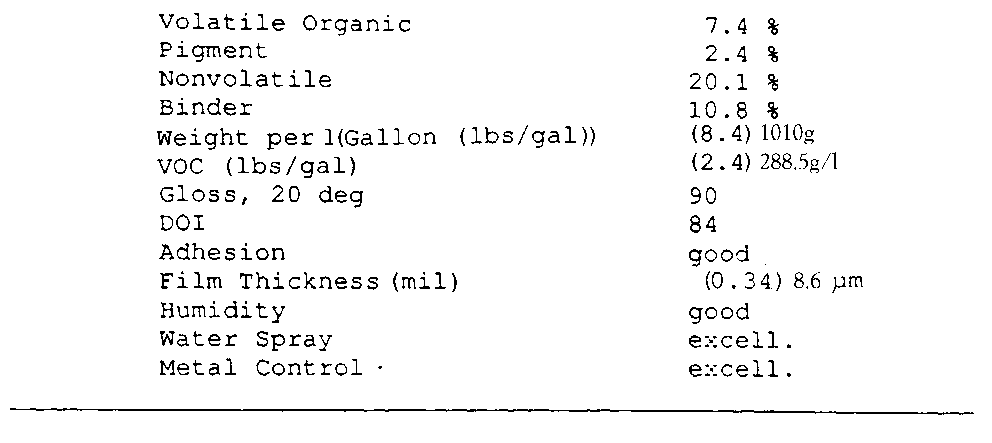

### EXAMPLE 3 - Preparation of a Water Borne Silver Metallic Base Coat

| | |
|---|---|
| Component A Aluminum Base | 16.0g |
| Component B Unpigmented Base | 54.0g |
| Component C Reducer Base | 85.0g |

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventional polyurethane clear coat are listed below, including appearance ratings.

| Properties of the Silver Metallic Base Coat and Base Coat, Clear Coat System | |
|---|---|
| Property | Value |
| Water | 73.1 % |
| Volatile Organic | 7.7 % |
| Pigment | 2.7 % |
| Nonvolatile | 19.2 % |
| Binder | 11.2 % |
| Weight (/Gallon (lbs/gal)) /l | (8.4) 1010 g |
| VOC (lbs/gal) | (2.6) 312,5 g/l |
| Gloss, 20 | 89 |
| DOI | 90 |
| Adhesion | good |
| Film Thickness (mil) | (0.53) 13,5 µm |
| Humidity | good |
| Water Spray | excell. |
| Metal Control | excell. |

### Example 4: Base Coat Preparation

The hydroxyl-functional acrylic polymer is prepared as follows. Approximately 695 grams of Toluene is combined with 175 grams of Urethane Grade Methyl Ethyl Ketone in a five-liter distillation flask, fitted with a water-cooled condenser, under a Nitrogen blanket. The mixture is brought to reflux, and adjusted to reflux at 100° C by adding Methyl Ethyl Ketone, the Nitrogen flow reduced to a minimum, and a 2215 grams of mixture of α,β-ethylenically unsaturated monomers is pumped into the flask over two hours. The monomer mixture consists of Methyl Methacrylate - 8.1%, Styrene - 21.2%, n-Butyl Methacrylate - 54.2%, Acrylic Acid - 2.7%, 2-Ethylhexyl Acrylate - 2.8%, and alpha-Methyl Styrene - 2.0%, and Hydroxyethyl Methacrylate - 9.1%. While the monomers are being pumped into the reaction flask, a mixture of 55 grams of free-radical initiator (α,α'-azobis(isobutyronitrile)) and 250 grams solvent (Methyl Ethyl Ketone) is simultaneously fed into the flask over two hours.

After adding all the monomers, solvent, and initiator (and flushing the pumps and feed lines with propylene glycol monopropyl ether), the reaction is held at reflux. After sixty minutes at reflux, a mixture of 11 grams of initiator and 120 grams of solvent (Methyl Ethyl Ketone) is pumped into the reaction flask over seventy-five minutes. After adding the initiator and solvent mixture, the reaction is held at reflux. After one to two hours at reflux, the reaction vessel is cooled to just below reflux, and fitted with a Barrett trap below the condenser. Solvent is distilled off, until 130 grams of solvent is collected. Then the solution is cooled and poured into a lined metal can. The acid number of this polymer is between 19 and 21 milligrams of KOH per gram of resin solids, and its percent non-volatile is between 66% and 69%.

The diisocyanate / polyether adduct is formed by the reaction of one isocyanate group of a diisocyanate with the hydroxyl group of a Methoxy Polyethylene Glycol of the formula: CH₃O-(CH₂CH₂O)ₙ-H, where n = 7 - 45. This reaction is carried out in a dry air atmosphere, as follows.

In a 1-liter distillation flask, fitted with a water-cooled condenser and a dry air-sparge tube, under a dry air atmosphere, 231.7 grams of isophorone diisocyanate is combined with 35.9 grams of Urethane Grade Methyl Ethyl Ketone, and 374.5 grams of Methoxy Polyethylene Glycol of the formula: CH₃O-(CH₂CH₂O)ₙ-H (molecular weight = 350). The mixture is then stirred for 15 minutes at ambient temperature, and 0.2 grams of dibutyltin diacetate is added. The mixture is continuously stirred, and heated as necessary, to maintain a temperature of 60° C for two hours. The percent isocyanate of the adduct solution should be 6.7% - 6.9%, or 7.2% based on solids.

To make the final urethane / acrylic graft copolymer, 610.9 grams of the hydroxyl-functional acrylic polymer is combined with 94.6 grams of the diisocyanate / polyether adduct, and 60 grams of Toluene in a five-liter distillation flask, fitted with a water-cooled condenser, under a dry Nitrogen atmosphere. The mixture is heated to 75° C, and held at that temperature for two and one-half hours. The temperature is then increased until the solution reaches reflux (~104° C), and held at reflux for thirty minutes. The solution is then cooled to 75° C, and vacuum stripped (85 mbars pressure) to remove approximately 100 grams of solvent. The vacuum is broken with Nitrogen, and 220 grams of ethylene glycol monobutyl ether is added to the flask. After stirring the mixture for ten minutes, vacuum stripping is resumed. Stripping continues at 75° C / 85 mbars until a total of 210 to 212 grams (including the first 100 grams) of solvent has been removed. The solution is then cooled, and filtered into a lined can. The acid number is between 15 and 17 milligrams of KOH per gram of resin solids, and the percent non-volatile is between 66% and 69%.

### Preparation of Component A - Aluminum Base

A commerical solvent borne aluminum paste, 60.0g, was added to 60.0g of butoxyethanol. The mixture was stirred until a homogeneous dispersion was produced. To this dispersion, 30.0g, of the resin described above was added to the dispersion and the entire mixture stirred until a smooth, uniform slurry was produced. This aluminum base contains 39% volatile organic solvent by weight, a soldis level of 61.0% by weight, a binder level of 13% by weight and an aluminum flake level of 26.0% by weight.

### Preparation of Component B - Pigmented Base

The following pigment slurry was prepared, 12.2g of NeoCryl A-6037, 14.8g of NeoCryl A-640, 0.3g of 30% aqueous ammonia, 3.2g of Perrindo Maroon R-6424 manufactured by Mobay Corporation, 0.1g of a defoamer and 0.05g of Surfynol 104BC manufactured by Air Products. The above mixture were mixed together and predispersed using a Cowles blade. The mixture was then ground on a sand mill until the desired particle size was achieved. A let down solution containing 29.5g of NeoCryl A-622, 2.6g of butoxyethanol, 1.3g of deionized water and 0.03g of 1% aqueous solution of FC-120 was added to the grind portion under agitation. An unpigmented base can be prepared using the procedure above with the elimination of the Perrindo Maroon R-6424 pigment. A wax dispersion was prepared by grinding 50.0g of a wax, 50.0g of unpigmented resin solution, 50.0 g of deionized water and 50.0g of butoxyethanol. This paste was ground to the desired particle size using conventional techniques. To the pigmented and unpigmented bases described above, 6.0g of this wax dispersion was added with stirring. Also added to the pigmented and unpigmented bases describee above was 16.0g of NeoRez R-9637 manufactured by ICI Resins. The resulting pigmented base had a pH of 8.4, a solids level of 38.1% by weight, a volatile organic level of 10.5% by weight, a binder level of 34.2% by weight, a pigment level of 4.3% by weight and a water level of 51.4% by weight. The unpigmented base has a solid level of 35.4% by weight, volatile organic level of 9.5% by weight, a water level of 55.1% by weight and a pH of 8.5.

### Preparation of Component C - Reducer Base

To 1953.2g of deionized water, 31.3g of Laponite RD manufactured by Laporte Industries and 10.7g of Pluracol P1010 manufactured by BASF Corporation was added. The resulting solution was then agitated for one hour until the Laponite RD was completely dispersed. To this solution was added 1953.2g of deionized water. The resulting mixture had a Laponite RD level of 0.79% by weight and a polypropylene glycol level of 0.27% by weight.

### EXAMPLE 5 - PREPARATION OF A WATER BORNE RED METALLIC BASE COAT

| Component | Parts by Weight |
|---|---|
| Component A Aluminum Base | 16.0 |
| Component B Pigmented Base | 54.0 |
| Component C Reducer Base | 85.0 |

The above formula was used to prepare a red metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventual polyurethane clear coat are listed below, including appearance ratings.

| Properties of the Red Metallic Base Coat and Base Coat, Clear Coat System | |
|---|---|
| Property | Value |
| Water | 72.5 % |
| Volatile Organic | 7.4 % |
| Pigment | 2.4 % |
| Nonvolatile | 20.1 % |
| Binder | 10.8 % |
| Weight per l (Gallon (lbs/gal)) | (8.4) 1010 g |
| VOC (lbs/gal) | (2.4) 288,5 g/l |
| Gloss, 20 deg | 90 |
| DOI | 84 |
| Adhesion | good |
| Film Thickness (mil) | (0.34) 8,6 µm |
| Humidity | good |
| Water Spray | excell. |
| Metal Control | excell. |

### EXAMPLE 6 - Preparation of a Water Borne Silver Metallic Base Coat

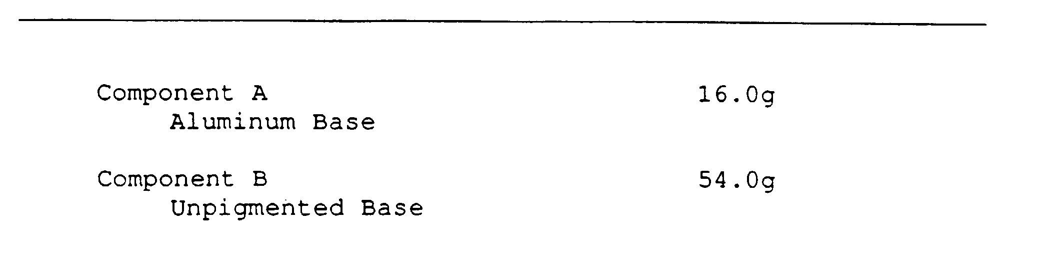

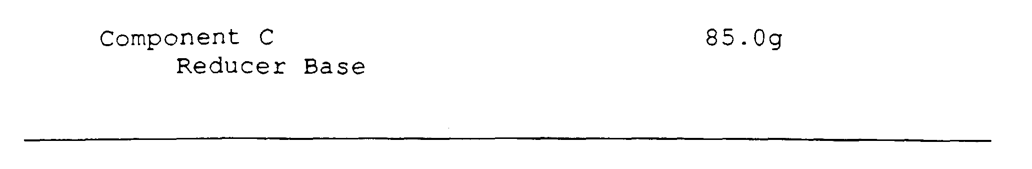

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventional polyurethane clear coat are listed below, including appearance ratings.

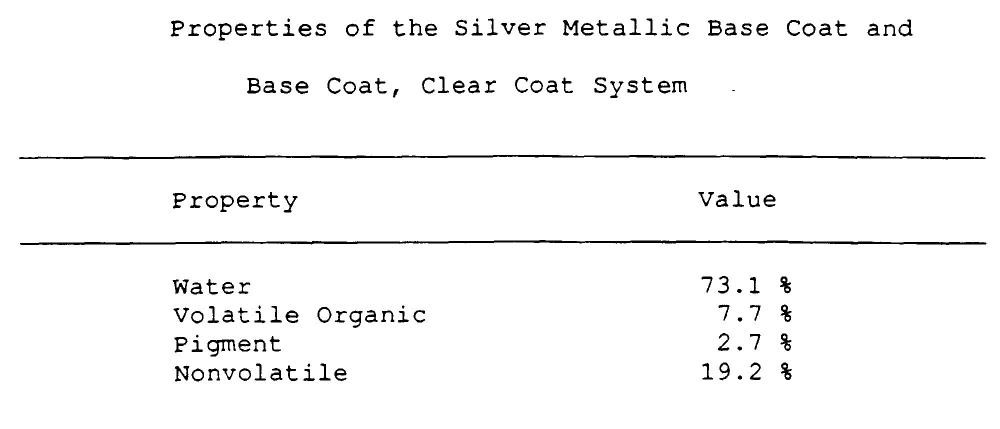

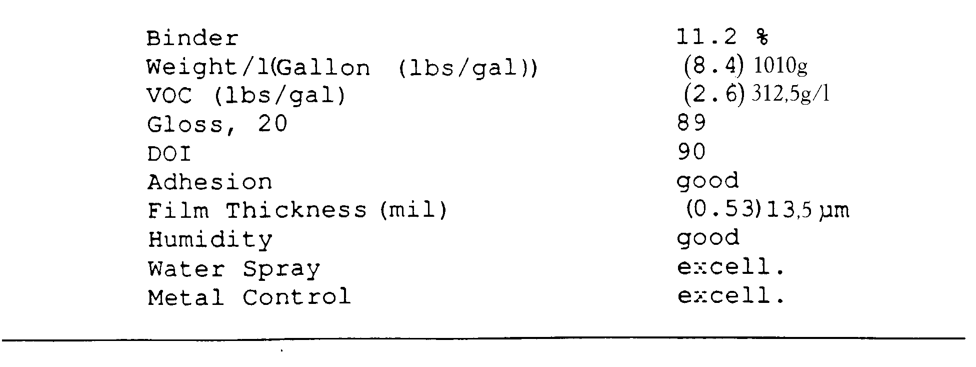

### Example 7: Base Coat Preparation

Approximately 134 grams of Propylene glycol monopropyl ether is combined with 5 grams of Methyl Ethyl Ketone in a one-liter distillation flask, fitted with a water-cooled condenser, under a Nitrogen blanket. The mixture is brought to reflux (~ 140° C), the Nitrogen flow reduced to a minimum, and 454 grams of a mixture of α,β-ethylenically unsaturated monomers is pumped into the flask over two hours. The monomer mixture consists of Methyl Methacrylate - 7.2%, Styrene - 18.8%, n-Butyl Methacrylate - 48.1%, Acrylic Acid - 1.7%, 2-Ethylhexyl Acrylate - 2.4%, alpha-Methyl Styrene - 1.7%, and Polyethylene Glycol Monomethacrylate (containing 10 Ethylene oxide units) - 19.9%. While the monomers are being pumped into the reaction flask, a mixture of 11 grams of free-radical initiator (t-Butyl Perbenzoate) and 50 grams solvent (propylene glycol monopropyl ether) is simultaneously fed into the flask over two hours.

After adding all the monomers, solvent, and initiator (and flushing the pumps and feed lines with propylene glycol monopropyl ether), the reaction is held at reflux. After thirty minutes at reflux, a mixture of 1.7 grams of initiator and 35 grams of solvent (propylene glycol monopropyl ether) is pumped into the reaction flask over ten minutes. After adding the initiator and solvent mixture, the reaction is held at reflux. After one to two hours at reflux, the reaction is cooled and filtered into a lined metal can. The viscosity of this polymer is between 6,000 and 8,000 mPas (cps) at 63.4% non-volatile by weight, measured at 25 °C, and its acid number is from 14 to 16 milligrams of KOH per gram of resin solids.

### Preparation of Component A - Aluminum Base

A commerical solvent borne aluminum paste, 60.0g, was added to 60.0g of butoxyethanol. The mixture was stirred until a homogeneous dispersion was produced. To this dispersion, 30.0g, of the resin described above was added to the dispersion and the entire mixture stirred until a smooth, uniform slurry was produced. This aluminum base contains 39% volatile organic solvent by weight, a soldis level of 61.0% by weight, a binder level of 13% by weight and an aluminum flake level of 26.0% by weight.

### Preparation of Component B - Pigmented Base

The following pigment slurry was prepared, 12.2g of NeoCryl A-6037, 14.8g of NeoCryl A-640, 0.3g of 30% aqueous ammonia, 3.2g of Perrindo Maroon R-6424 manufactured by Mobay Corporation, 0.lg of a defoamer and 0.05g of Surfynol 104BC manufactured by Air Products. The above mixture were mixed together and predispersed using a Cowles blade. The mixture was then ground on a sand mill until the desired particle size was achieved. A let down solution containing 29.5g of NeoCryl A-622, 2.6g of butoxyethanol, 1.3g of deionized water and 0.03g of 1% aqueous solution of FC-120 was added to the grind portion under agitation. An unpigmented base can be prepared using the procedure above with the elimination of the Perrindo Maroon R-6424 pigment. A wax dispersion was prepared by grinding 50.0g of a wax, 50.0g of unpigmented resin solution, 50.0 g of deionized water and 50.0g of butoxyethanol. This paste was ground to the desired particle size using conventional techniques. To the pigmented and unpigmented bases described above, 6.0g of this wax dispersion was added with stirring. The resulting pigmented base had a pH of 8.6, a solids level of 37.8% by weight, a volatile organic level of 10.6% by weight, a binder level of 33.3% by weight, a pigment level of 5.0% by weight and a water level of 51.6% by weight. The unpigmented base has a solid level of 34.7% by weight, volatile organic level of 9.4% by weight, a water level of 55.9% by weight and a pH of 8.7.

### Preparation of Component C - Reducer Base

To 1953.2g of deionized water, 31.3g of Laponite RD manufactured by Laporte Industries was added. The resulting solution was then agitated for one hour until the Laponite RD was completely dispersed. To this solution was added 8.0g of Troysol LAC manufactured by Troy Chemical Company and the entrie solution stirred for 15 minutes. The resulting solution was then diluted with 1953.2g of deionized water. To this Laponite RD dispersion was added 462.9g of NeoRez R-9637 manufactured by ICI Resins. The resulting mixture had a Laponite RD level of 0.71% by weight, Troysol LAC level of 0.18% by weight, water dispersible polyurethane level of 4.2% by weight and a volatile organic level of 1.1% by weight.

### EXAMPLE 8 - PREPARATION OF A WATER BORNE RED METALLIC BASE COAT

| Component | Parts by Weight |
|---|---|
| Component A Aluminum Base | 16.0 |
| Component B Pigmented Base | 44.0 |
| Component C Reducer Base | 95.0 |

The above formula was used to prepare a red metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventual polyurethane clear coat are listed below, including appearance ratings.

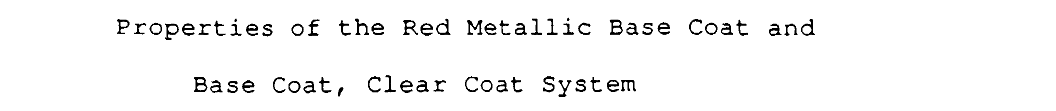

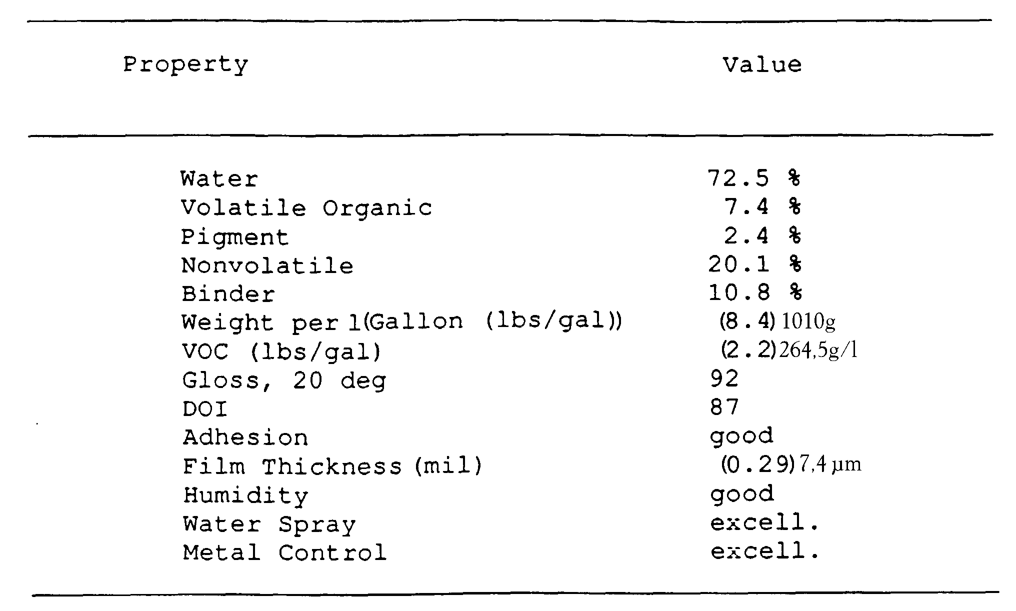

### EXAMPLE 9 - Preparation of a Water Borne Silver Metallic Base Coat

| | |
|---|---|
| Component A Aluminum Base | 16.0g |
| Component B Unpigmented Base | 44.0g |
| Component C Reducer Base | 95.0g |

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventional polyurethane clear coat are listed below, including appearance ratings.

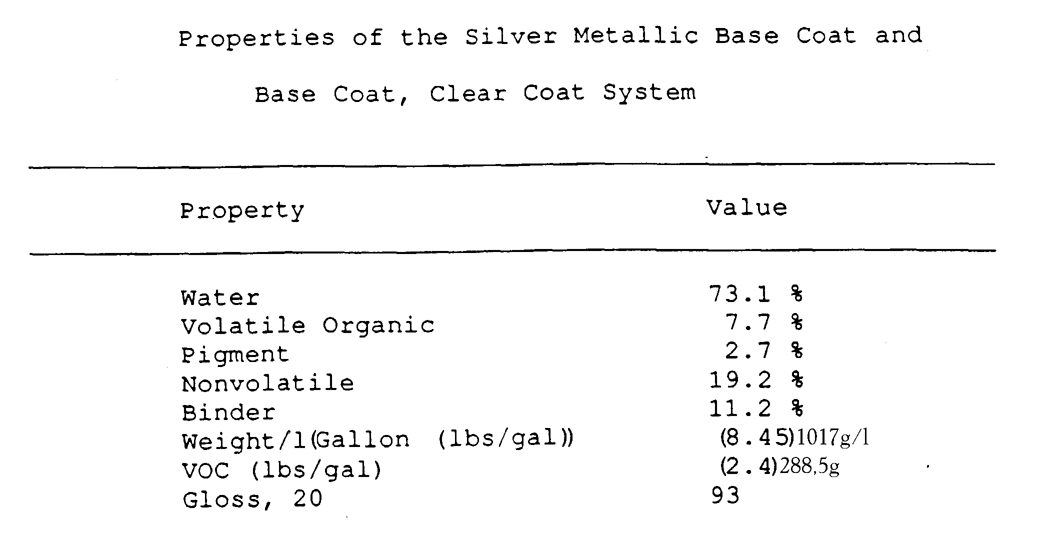

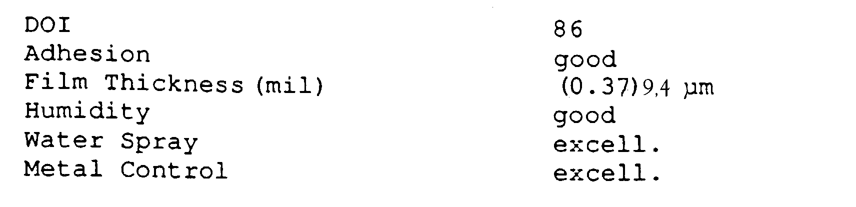

### Example 10: Base Coat Preparation

Approximately 134 grams of Propylene glycol monopropyl ether is combined with 5 grams of Methyl Ethyl Ketone in a one-liter distillation flask, fitted with a water-cooled condenser, under a Nitrogen blanket. The mixture is brought to reflux (~ 140° C), the Nitrogen flow reduced to a minimum, and 454 grams of a mixture of α,β-ethylenically unsaturated monomers is pumped into the flask over two hours. The monomer mixture consists of Methyl Methacrylate - 7.2%, Styrene - 18.8%, n-Butyl Methacrylate - 48.1%, Acrylic Acid - 1.7%, 2-Ethylhexyl Acrylate - 2.4%, alpha-Methyl Styrene - 1.7%, and Polyethylene Glycol Monomethacrylate (containing 10 Ethylene oxide units) - 19.9%. While the monomers are being pumped into the reaction flask, a mixture of 11 grams of free-radical initiator (t-Butyl Perbenzoate) and 50 grams solvent (propylene glycol monopropyl ether) is simultaneously fed into the flask over two hours.

After adding all the monomers, solvent, and initiator (and flushing the pumps and feed lines with propylene glycol monopropyl ether), the reaction is held at reflux. After thirty minutes at reflux, a mixture of 1.7 grams of initiator and 35 grams of solvent (propylene glycol monopropyl ether) is pumped into the reaction flask over ten minutes. After adding the initiator and solvent mixture, the reaction is held at reflux. After one to two hours at reflux, the reaction is cooled and filtered into a lined metal can. The viscosity of this polymer is between 6,000 and 8,000 cps at 63.4% non-volatile by weight, measured at 25 °C, and its acid number is from 14 to 16 milligrams of KOH per gram of resin solids.

### Preparation of Component A - Aluminum Base

A commerical solvent borne aluminum paste, 60.0g, was added to 60.0g of butoxyethanol. The mixture was stirred until a homogeneous dispersion was produced. To this dispersion, 30.0g, of the resin described above was added to the dispersion and the entire mixture stirred until a smooth, uniform slurry was produced. This aluminum base contains 39% volatile organic solvent by weight, a soldis level of 61.0% by weight, a binder level of 13% by weight and an aluminum flake level of 26.0% by weight.

### Preparation of Component B - Pigmented Base

The following pigment slurry was prepared, 12.2g of NeoCryl A-6037, 14.8g of NeoCryl A-640, 0.3g of 30% aqueous ammonia, 3.2g of Perrindo Maroon R-6424 manufactured by Mobay Corporation, 0.1g of a defoamer and 0.05g of Surfynol 104BC manufactured by Air Products. The above mixture were mixed together and predispersed using a Cowles blade. The mixture was then ground on a sand mill until the desired particle size was achieved. A let down solution containing 29.5g of NeoCryl A-622, 2.6g of butoxyethanol, 1.3g of deionized water and 0.03g of 1% aqueous solution of FC-120 was added to the grind portion under agitation. An unpigmented base can be prepared using the procedure above with the elimination of the Perrindo Maroon R-6424 pigment. A wax dispersion was prepared by grinding 50.0g of a wax, 50.0g of unpigmented resin solution, 50.0 g of deionized water and 50.0g of butoxyethanol. This paste was ground to the desired particle size using conventional techniques. To the pigmented and unpigmented bases described above, 6.0g of this wax dispersion was added with stirring. Also added to the pigmented and unpigmented bases describee above was 16.0g of NeoRez R-9637 manufactured by ICI Resins. The resulting pigmented base had a pH of 8.4, a solids level of 38.1% by weight, a volatile organic level of 10.5% by weight, a binder level of 34.2% by weight, a pigment level of 4.3% by weight and a water level of 51.4% by weight. The unpigmented base has a solid level of 35.4% by weight, volatile organic level of 9.5% by weight, a water level of 55.1% by weight and a pH of 8.5.

### Preparation of Component C - Reducer Base

To 1953.2g of deionized water, 31.3g of Laponite RD manufactured by Laporte Industries and 10.7g of Pluracol P1010 manufactured by BASF Corporation was added. The resulting solution was then agitated for one hour until the Laponite RD was completely dispersed. To this solution was added 1953.2g of deionized water. The resulting mixture had a Laponite RD level of 0.79% by weight and a polypropylene glycol level of 0.27% by weight.

### EXAMPLE 11 - PREPARATION OF A WATER BORNE RED METALLIC BASE COAT

| Component | Parts by Weight |
|---|---|
| Component A Aluminum Base | 16.0 |
| Component B Pigmented Base | 54.0 |
| Component C Reducer Base | 85.0 |

The above formula was used to prepare a red metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventual polyurethane clear coat are listed below, including appearance ratings.

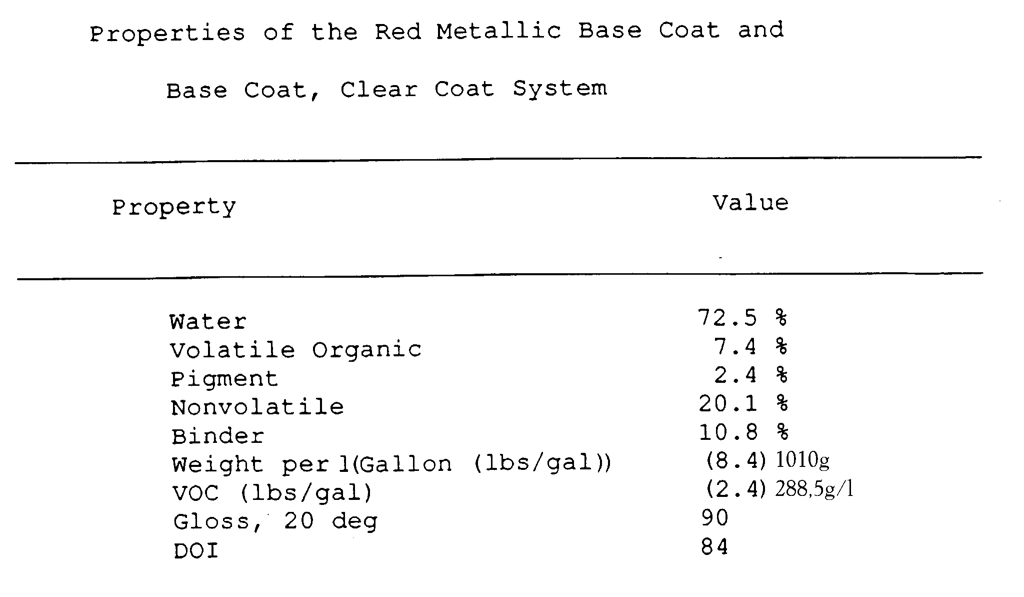

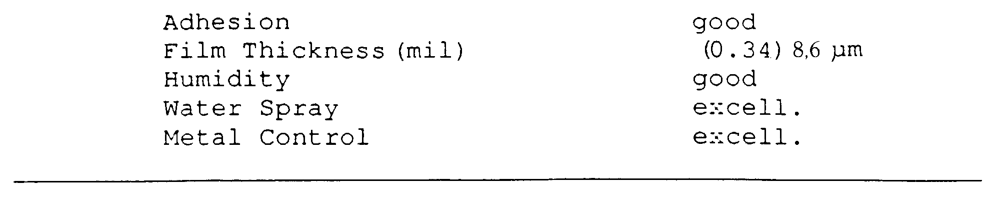

### EXAMPLE 12 - Preparation of a Water Borne Silver Metallic Base Coat

| | |
|---|---|
| Component A Aluminum Base | 16.0g |
| Component B Unpigmented Base | 54.0g |
| Component C Reducer Base | 85.0g |

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventional polyurethane clear coat are listed below, including appearance ratings.

| Properties of the Silver Metallic Base Coat and Base Coat, Clear Coat System | |
|---|---|
| Property | Value |
| Water | 73.1 % |
| Volatile Organic | 7.7 % |
| Pigment | 2.7 % |
| Nonvolatile | 19.2 % |
| Binder | 11.2 % |
| Weight/l (Gallon (lbs/gal)) | (8.4) 1010g |
| VOC (lbs/gal) | (2.6) 312,5 g/l |
| Gloss, 20 | 89 |
| DOI | 90 |
| Adhesion | good |
| Film Thickness (mil) | (0.53) 13,5 µm |
| Humidity | good |
| Water Spray | excell. |
| Metal Control | excell. |

### Example 13: Base Coat Preparation

In a 1-liter distillation flask, fitted with a water-cooled condenser and a dry air-sparge tube, under a dry air atmosphere, 177.8 grams of isophorone diisocyanate is combined with 422.4 grams of Methoxy Polyethylene Glycol of the formula: CH₃O-(CH₂CH₂O)ₙ-H (molecular weight = 550), 10 grams of Urethane Grade Methyl Ethyl Ketone, and 12 grams of a 0.5% solution of Butylated Hydroxy Toluene in Urethane Grade Methyl Ethyl Ketone.

The mixture is then stirred for 5 minutes at ambient temperature, and 0.2 grams of dibutyltin diacetate is added. The mixture is continuously stirred, and heated as necessary, to maintain a temperature of 60° C for two hours. The mixture is then cooled to less than 30° C, and 96.5 grams of Hydroxyethyl Acrylate is added. The mixture is continuously stirred, and heated as necessary, to maintain a temperature of 60° C for two hours. Any residual isocyanate (as determined by Infrared Spectroscopy) should be reacted with a minimum amount of anhydrous ethanol. The product can be sealed in a dried glass bottle.

Approximately 134 grams of Propylene glycol monopropyl ether is combined with 5 grams of Methyl Ethyl Ketone in a one-liter distillation flask, fitted with a water-cooled condenser, under a Nitrogen blanket. The mixture is brought to reflux (~ 140° C), the Nitrogen flow reduced to a minimum, and a mixture of α,β-ethylenically unsaturated monomers is pumped into the flask over two hours. The monomer mixture consists of Methyl Methacrylate - 7.3%, Styrene - 18.9%, n-Butyl Methacrylate - 47.9%, Acrylic Acid - 1.6%, 2-Ethylhexyl Acrylate - 2.4%, and Polyether Monomer (described above) - 22.0%. While the monomers are being pumped into the reaction flask, a mixture of 10.6 grams of free-radical initiator (t-Butyl Perbenzoate) and 50 grams solvent (propylene glycol monopropyl ether) is simultaneously fed into the flask over two hours.

After adding all the monomers, solvent, and initiator (and flushing the pumps and feed lines with propylene glycol monopropyl ether), the reaction is held at reflux. After thirty minutes at reflux, a mixture of 1.2 grams of initiator and 35 grams of solvent (propylene glycol monopropyl ether) is pumped into the reaction flask over ten minutes. After adding the initiator and solvent mixture, the reaction is held at reflux. After one to two hours at reflux, the reaction is cooled and filtered into a lined metal can. The viscosity of this polymer is between 2,500 and 4,500 cps at 66.2% non-volatile by weight, measured at 25 °C, and its acid number is from 12.5 to 14.5 milligrams of KOH per gram of resin solids.

### Preparation of Component A - Aluminum Base

A commerical solvent borne aluminum paste, 60.0g, was added to 60.0g of butoxyethanol. The mixture was stirred until a homogeneous dispersion was produced. To this dispersion, 30.0g, of the resin described above was added to the dispersion and the entire mixture stirred until a smooth, uniform slurry was produced. This aluminum base contains 39% volatile organic solvent by weight, a soldis level of 61.0% by weight, a binder level of 13% by weight and an aluminum flake level of 26.0% by weight.

### Preparation of Component B - Pigmented Base

The following pigment slurry was prepared, 12.2g of NeoCryl A-6037, 14.8g of NeoCryl A-640, 0.3g of 30% aqueous ammonia, 3.2g of Perrindo Maroon R-6424 manufactured by Mobay Corporation, 0.1g of a defoamer and 0.05g of Surfynol 104BC manufactured by Air Products. The above mixture were mixed together and predispersed using a Cowles blade. The mixture was then ground on a sand mill until the desired particle size was achieved. A let down solution containing 29.5g of NeoCryl A-622, 2.6g of butoxyethanol, 1.3g of deionized water and 0.03g of 1% aqueous solution of FC-120 was added to the grind portion under agitation. An unpigmented base can be prepared using the procedure above with the elimination of the Perrindo Maroon R-6424 pigment. A wax dispersion was prepared by grinding 50.0g of a wax, 50.0g of unpigmented resin solution, 50.0 g of deionized water and 50.0g of butoxyethanol. This paste was ground to the desired particle size using conventional techniques. To the pigmented and unpigmented bases described above, 6:0g of this wax dispersion was added with stirring. The resulting pigmented base had a pH of 8.6, a solids level of 37.8% by weight, a volatile organic level of 10.6% by weight, a binder level of 33.3% by weight, a pigment level of 5.0% by weight and a water level of 51.6% by weight. The unpigmented base has a solid level of 34.7% by weight, volatile organic level of 9.4% by weight, a water level of 55.9% by weight and a pH of 8.7.

### Preparation of Component C - Reducer Base

To 1953.2g of deionized water, 31.3g of Laponite RD manufactured by Laporte Industries was added. The resulting solution was then agitated for one hour until the Laponite RD was completely dispersed. To this solution was added 8.0g of Troysol LAC manufactured by Troy Chemical Company and the entrie solution stirred for 15 minutes. The resulting solution was then diluted with 1953.2g of deionized water. To this Laponite RD dispersion was added 462.9g of NeoRez R-9637 manufactured by ICI Resins. The resulting mixture had a Laponite RD level of 0.71% by weight, Troysol LAC level of 0.18% by weight, water dispersible polyurethane level of 4.2% by weight and a volatile organic level of 1.1% by weight.

### EXAMPLE 14 - PREPARATION OF A WATER BORNE RED METALLIC BASE COAT

| Component | Parts by Weight |
|---|---|
| Component A Aluminum Base | 16.0 |
| Component B Pigmented Base | 44.0 |
| Component C Reducer Base | 95.0 |

The above formula was used to prepare a red metallic base coat. The order of addition is that listed. After-each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventual polyurethane clear coat are listed below, including appearance ratings.

| Properties of the Red Metallic Base Coat and Base Coat, Clear Coat System | |
|---|---|
| Property | Value |
| Water | 72.5 % |
| Volatile Organic | 7.4 % |
| Pigment | 2.4 % |
| Nonvolatile | 20.1 % |
| Binder | 10.8 % |
| Weight per l (Gallon (lbs/gal)) | (8.4) 1010 g |
| VOC (lbs/gal) | (2.2) 264,5 g/l |
| Gloss, 20 deg | 92 |
| DOI | 87 |
| Adhesion | good |
| Film Thickness (mil) | (0.29) 7,4 µm |
| Humidity | good |
| Water Spray | excell. |
| Metal Control | excell. |

### EXAMPLE 15 - Preparation of a Water Borne Silver Metallic Base Coat

| | |
|---|---|
| Component A Aluminum Base | 16.0g |
| Component B Unpigmented Base | 44.0g |
| Component C Reducer Base | 95.0g |

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventional polyurethane clear coat are listed below, including appearance ratings.

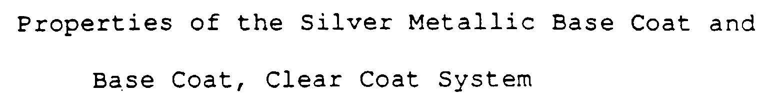

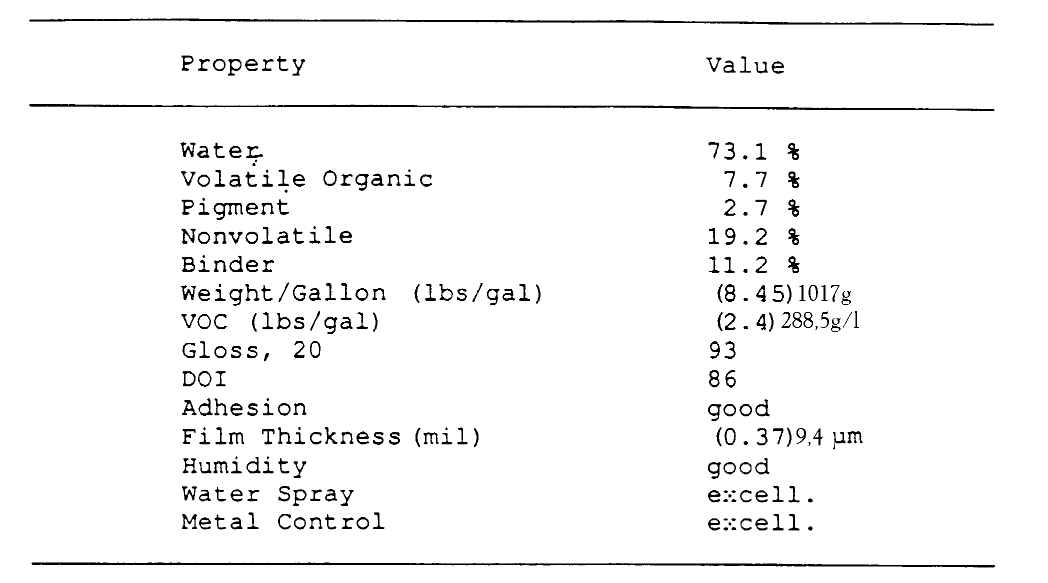

### Example 16: Base Coat Preparation

In a 1-liter distillation flask, fitted with a water-cooled condenser and a dry air-sparge tube, under a dry air atmosphere, 178 grams of meta-isopropenyl-α,α-dimethylbenzyl isocyanate is combined with 484.8 grams of Methoxy Polyethylene Glycol of the formula: CH₃O-(CH₂CH₂O)ₙ-H (molecular weight = 550), 60 grams of Urethane Grade Methyl Ethyl Ketone, and 13.2 grams of a 0.5% solution of Butylated Hydroxy Toluene in Urethane Grade Methyl Ethyl Ketone. The mixture is then stirred for 5 minutes at ambient temperature, and 0.2 grams of dibutyltin diacetate is added. The mixture is continuously stirred, and heated as necessary, to maintain a temperature of 60° C for two hours. Any residual isocyanate (as determined by Infrared Spectroscopy) should be reacted with a minimum amount of anhydrous ethanol. The product can be sealed in a dried glass bottle.

Approximately 134 grams of Propylene glycol monopropyl ether is combined with 5 grams of Methyl Ethyl Ketone in a one-liter distillation flask, fitted with a water-cooled condenser, under a Nitrogen blanket. The mixture is brought to reflux (~ 140° C), the Nitrogen flow reduced to a minimum, and a mixture of α,β-ethylenically unsaturated monomers is pumped into the flask over two hours. The monomer mixture consists of Methyl Methacrylate - 7.3%, Styrene - 18.9%, n-Butyl Methacrylate - 47.9%, Acrylic Acid - 1.6%, 2-Ethylhexyl Acrylate - 2.4%, and Polyether Monomer (described above) - 22.0%. While the monomers are being pumped into the reaction flask, a mixture of 10.6 grams of free-radical initiator (t-Butyl Perbenzoate) and 50 grams solvent (propylene glycol monopropyl ether) is simultaneously fed into the flask over two hours.

After adding all the monomers, solvent, and initiator (and flushing the pumps and feed lines with propylene glycol monopropyl ether), the reaction is held at reflux. After thirty minutes at reflux, a mixture of 1.2 grams of initiator and 35 grams of solvent (propylene glycol monopropyl ether) is pumped into the reaction flask over ten minutes. After adding the initiator and solvent mixture, the reaction is held at reflux. After one to two hours at reflux, the reaction is cooled and filtered into a lined metal can. The viscosity of this polymer is between 2,500 and 4,500 mPas (cps) at 66.2% non-volatile by weight, measured at 25 °C, and its acid number is from 12.5 to 14.5 milligrams of KOH per gram of resin solids.

### Preparation of Component A - Aluminum Base

A commerical solvent borne aluminum paste, 60.0g, was added to 60.0g of butoxyethanol. The mixture was stirred until a homogeneous dispersion was produced. To this dispersion, 30.0g, of the resin described above was added to the dispersion and the entire mixture stirred until a smooth, uniform slurry was produced. This aluminum base contains 39% volatile organic solvent by weight, a soldis level of 61.0% by weight, a binder level of 13% by weight and an aluminum flake level of 26.0% by weight.

### Preparation of Component B - Pigmented Base

The following pigment slurry was prepared, 12.2g of NeoCryl A-6037, 14.8g of NeoCryl A-640, 0.3g of 30% aqueous ammonia, 3.2g of Perrindo Maroon R-6424 manufactured by Mobay Corporation, 0.lg of a defoamer and 0.05g of Surfynol 104BC manufactured by Air Products. The above mixture were mixed together and predispersed using a Cowles blade. The mixture was then ground on a sand mill until the desired particle size was achieved. A let down solution containing 29.5g of NeoCryl A-622, 2.6g of butoxyethanol, 1.3g of deionized water and 0.03g of 1% aqueous solution of FC-120 was added to the grind portion under agitation. An unpigmented base can be prepared using the procedure above with the elimination of the Perrindo Maroon R-6424 pigment. A wax dispersion was prepared by grinding 50.0g of a wax, 50.0g of unpigmented resin solution, 50.0 g of deionized water and 50.0g of butoxyethanol. This paste was ground to the desired particle size using conventional techniques. To the pigmented and unpigmented bases described above, 6.0g of this wax dispersion was added with stirring. The resulting pigmented base had a pH of 8.6, a solids level of 37.8% by weight, a volatile organic level of 10.6% by weight, a binder level of 33.3% by weight, a pigment level of 5.0% by weight and a water level of 51.6% by weight. The unpigmented base has a solid level of 34.7% by weight, volatile organic level of 9.4% by weight, a water level of 55.9% by weight and a pH of 8.7.

### Preparation of Component C - Reducer Base

To 1953.2g of deionized water, 31.3g of Laponite RD manufactured by Laporte Industries was added. The resulting solution was then agitated for one hour until the Laponite RD was completely dispersed. To this solution was added 8.0g of Troysol LAC manufactured by Troy Chemical Company and the entrie solution stirred for 15 minutes. The resulting solution was then diluted with 1953.2g of deionized water. To this Laponite RD dispersion was added 462.9g of NeoRez R-9637 manufactured by ICI Resins. The resulting mixture had a Laponite RD level of 0.71% by weight, Troysol LAC level of 0.18% by weight, water dispersible polyurethane level of 4.2% by weight and a volatile organic level of 1.1% by weight.

### EXAMPLE 17 - PREPARATION OF A WATER BORNE RED METALLIC BASE COAT

| Component | Parts by Weight |
|---|---|
| Component A Aluminum Base | 16.0 |
| Component B Pigmented Base | 44.0 |
| Component C Reducer Base | 95.0 |

The above formula was used to prepare a red metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventual polyurethane clear coat are listed below, including appearance ratings.

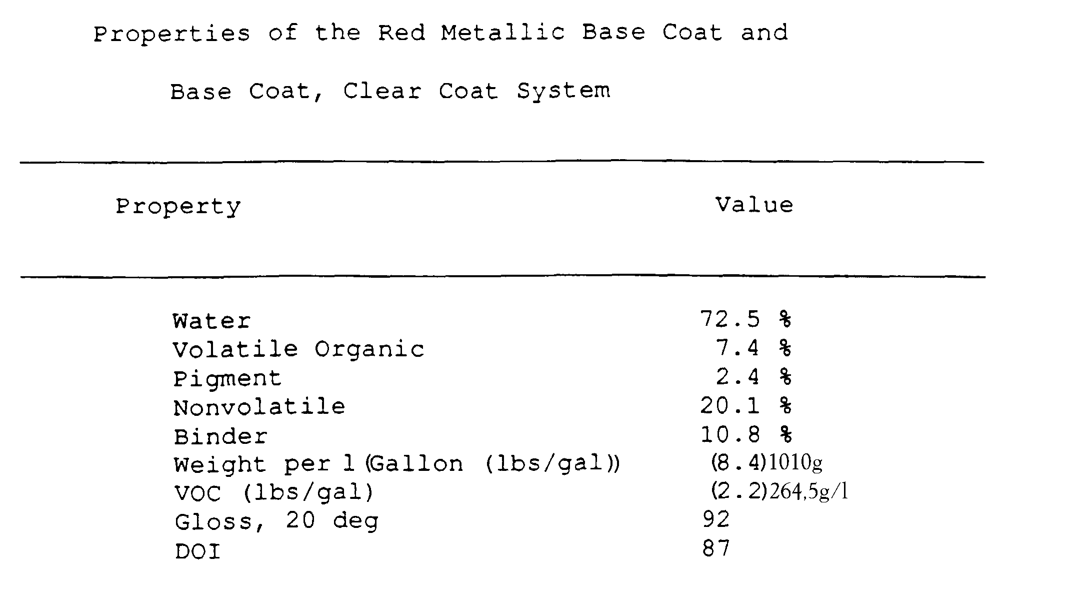

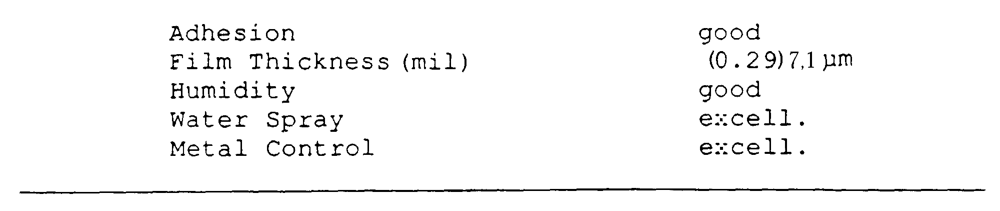

### EXAMPLE 18 - Preparation of a Water Borne Silver Metallic Base Coat

| | |
|---|---|
| Component A Aluminum Base | 16.0g |
| Component B Unpigmented Base | 44.0g |
| Component C Reducer Base | 95.0g |

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventional polyurethane clear coat are listed below, including appearance ratings.

| Properties of the Silver Metallic Base Coat and Base Coat, Clear Coat System | |
|---|---|
| Property | Value |
| Water | 73.1 % |
| Volatile Organic | 7.7 % |
| Pigment | 2.7 % |
| Nonvolatile | 19.2 % |
| Binder | 11.2 % |
| Weight/l (Gallon (lbs/gal)) | (8.45) 1017 g |
| VOC (lbs/gal) | (2.4) 288,5 g/l |
| Gloss, 20 | 93 |
| DOI | 86 |
| Adhesion | good |
| Film Thickness (mil) | (0.37) 9,4 µm |
| Humidity | good |
| Water Spray | excell. |
| Metal Control | excell. |

cured with polyisocyanates. Other examples of cured transparent clear coats are acrylic and/or polyester resins cured with silanes, acrylic and/or polyester acid cured epoxy coatings, and acrylic and/or polyester resins cured with aminoplast resins, however, this is not an inclusive list.

### PREFERRED EMBODIMENTS OF INVENTION

The following examples illustrate the invention without limiting the scope thereof.

### Example 19 Base Coat Preparation

Approximately 134 grams of Propylene glycol monopropyl ether is combined with 5 grams of Methyl Ethyl Ketone in a one-liter distillation flask, fitted with a water-cooled condenser, under a Nitrogen blanket. The mixture is brought to reflux (~ 140° C), the Nitrogen flow reduced to a minimum, and 454 grams of a mixture of ,β-ethylenically unsaturated monomers is pumped into the flask over two hours. The monomer mixture consists of Methyl Methacrylate - 7.2%, Styrene - 18.8%, n-Butyl Methacrylate - 48.1%, Acrylic Acid - 1.7%, 2-Ethylhexyl Acrylate - 2.4%, alpha-Methyl Styrene - 1.7%, and Polyethylene Glycol Monomethacrylate (containing 10 Ethylene oxide units) - 19.9%. While the monomers are being pumped into the reaction flask, a mixture of 11 grams of free-radical initiator (t-Butyl Perbenzoate) and 50 grams solvent (propylene glycol monopropyl ether) is simultaneously fed into the flask over two hours.

After adding all the monomers, solvent, and initiator (and flushing the pumps and feed lines with propylene glycol monopropyl ether), the reaction is held at reflux. After thirty minutes at reflux, a mixture of 1.7 grams of initiator and 35 grams of solvent (propylene glycol monopropyl ether) is pumped into the reaction flask over ten minutes. After adding the initiator and solvent mixture, the reaction is held at reflux. After one to two hours at reflux, the reaction is cooled and filtered into a lined metal can. The viscosity of this polymer is between 6,000 and 8,000 mPas (cps) at 63.4% non-volatile by weight, measured at 25 °C, and its acid number is from 14 to 16 milligrams of KOH per gram of resin solids.

### Preparation of Component A - Aluminum Base

A commerical solvent borne aluminum paste, 60.0g, was added to 60.0g of butoxyethanol. The mixture was stirred until a homogeneous dispersion was produced. To this dispersion, 30.0g, of the resin described above was added to the dispersion and the entire mixture stirred until a smooth, uniform slurry was produced. This aluminum base contains 39% volatile organic solvent by weight, a soldis level of 61.0% by weight, a binder level of 13% by weight and an aluminum flake level of 26.0% by weight.

### Preparation of Component B - Pigmented Base

The following pigment slurry was prepared, 12.2g of NeoCryl A-6037, 14.8g of NeoCryl A-640, 0.3g of 30% aqueous ammonia, 3.2g of Perrindo Maroon R-6424 manufactured by Mobay Corporation, 0.lg of a defoamer and 0.05g of Surfynol 104BC manufactured by Air Products. The above mixture were mixed together and predispersed using a Cowles blade. The mixture was then ground on a sand mill until the desired particle size was achieved. A let down solution containing 29.5g of NeoCryl A-622, 2.6g of butoxyethanol, 1.3g of deionized water and 0.03g of 1% aqueous solution of FC-120 was added to the grind portion under agitation. An unpigmented base can be prepared using the procedure above with the elimination of the Perrindo Maroon R-6424 pigment. A wax dispersion was prepared by grinding 50.0g of a wax, 50.0g of unpigmented resin solution, 50.0 g of deionized water and 50.0g of butoxyethanol. This paste was ground to the desired particle size using conventional techniques. To the pigmented and unpigmented bases described above, 6.0g of this was dispersion was added with stirring. Also added to the pigmented and unpigmented bases describee above was 16.0g of NeoRez R-9637 manufactured by ICI Resins. The resulting pigmented base had a pH of 8.4, a solids level of 38.1% by weight, a volatile organic level of 10.5% by weight, a binder level of 34.2% by weight, a pigment level of 4.3% by weight and a water level of 51.4% by weight. The unpigmented base has a solid level of 35.4% by weight, volatile organic level of 9.5% by weight, a water level of 55.1% by weight and a pH of 8.5.

### Preparation of Component C - Reducer Base

To 1953.2g of deionized water, 31.3g of Laponite RD manufactured by Laporte Industries and 10.7g of Pluracol P1010 manufactured by BASF Corporation was added. The resulting solution was then agitated for one hour until the Laponite RD was completely dispersed. To this solution was added 1953.2g of deionized water. The resulting mixture had a Laponite RD level of 0.79% by weight and a polypropylene glycol level of 0.27% by weight.

### EXAMPLE 20 - PREPARATION OF A WATER BORNE RED METALLIC BASE COAT

| Component | Parts by Weight |
|---|---|
| Component A Aluminum Base | 16.0 |
| Component B Pigmented Base | 54.0 |
| Component C Reducer Base | 85.0 |

The above formula was used to prepare a red metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventual polyurethane clear coat are listed below, including appearance ratings.

| Properties of the Red Metallic Base Coat and Base Coat, Clear Coat System | |
|---|---|
| Property | Value |
| Water | 72.5 % |
| Volatile Organic | 7.4 % |
| Pigment | 2.4 % |
| Nonvolatile | 20.1 % |
| Binder | 10.8 % |
| Weight per l (Gallon (lbs/gal)) | (8.4) 1010 g |
| VOC (lbs/gal) | (2.4) 288,5 g/l |
| Gloss, 20 deg | 90 |
| DOI | 84 |
| Adhesion | good |
| Film Thickness (mil) | (0.34) 8.6 µm |
| Humidity | good |
| Water Spray | excell. |
| Metal Control | excell. |

### EXAMPLE 21 - Preparation of a Water Borne Silver Metallic Base Coat

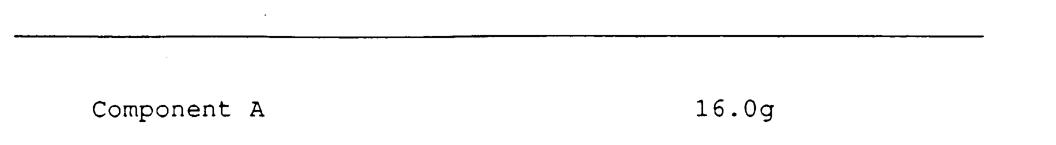

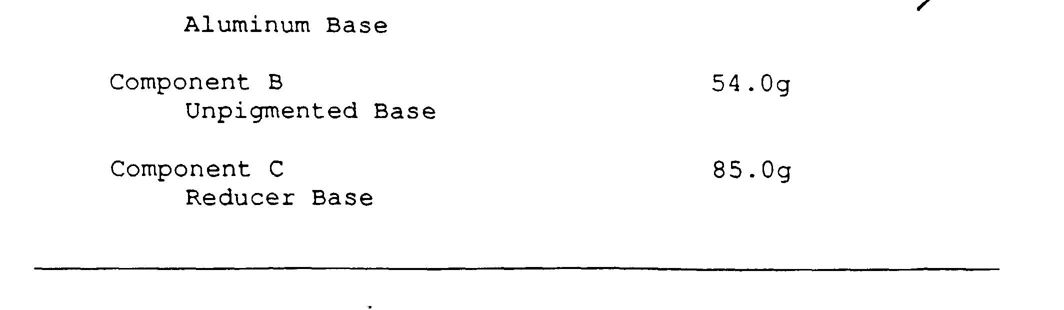

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventional polyurethane clear coat are listed below, including appearance ratings.

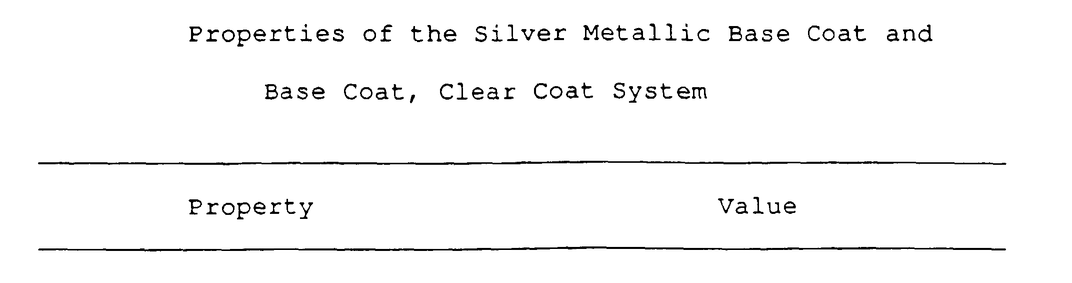

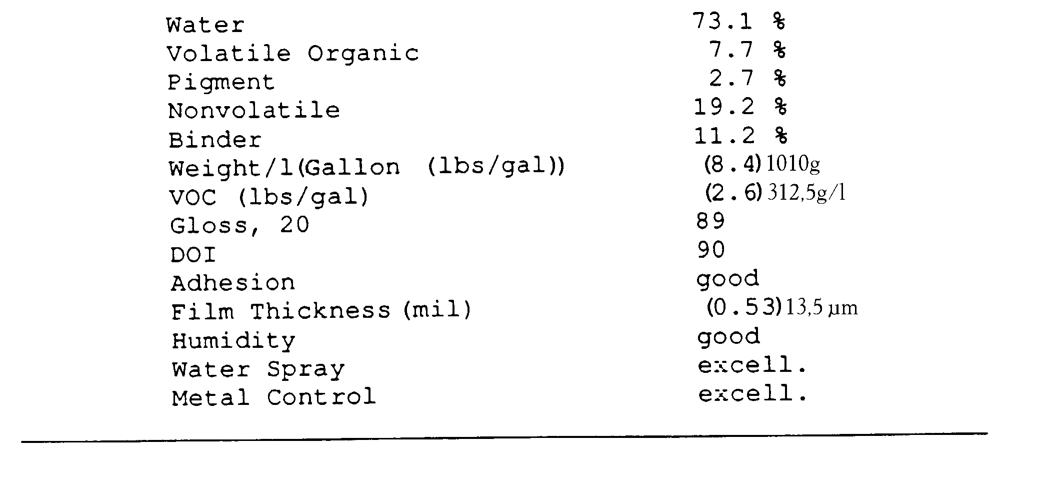

### Example 22: Base Coat Preparation

The hydroxyl-functional acrylic polymer is prepared as follows.

Approximately 695 grams of Toluene is combined with 175 grams of Urethane Grade Methyl Ethyl Ketone in a five-liter distillation flask, fitted with a water-cooled condenser, under a Nitrogen blanket. The mixture is brought to reflux, and adjusted to reflux at 100° C by adding Methyl Ethyl Ketone, the Nitrogen flow reduced to a minimum, and a 2215 grams of mixture of ,β-ethylenically unsaturated monomers is pumped into the flask over two hours. The monomer mixture consists of Methyl Methacrylate - 8.1%, Styrene - 21.2%, n-Butyl Methacrylate - 54.2%, Acrylic Acid - 2.7%, 2-Ethylhexyl Acrylate - 2.8%, and alpha-Methyl Styrene - 2.0%, and Hydroxyethyl Methacrylate - 9.1%. While the monomers are being pumped into the reaction flask, a mixture of 55 grams of free-radical initiator ( , '-azobis(isobutyronitrile)) and 250 grams solvent (Methyl Ethyl Ketone) is simultaneously fed into the flask over two hours.

After adding all the monomers, solvent, and initiator (and flushing the pumps and feed lines with propylene glycol monopropyl ether), the reaction is held at reflux. After sixty minutes at reflux, a mixture of 11 grams of initiator and 120 grams of solvent (Methyl Ethyl Ketone) is pumped into the reaction flask over seventy-five minutes. After adding the initiator and solvent mixture, the reaction is held at reflux. After one to two hours at reflux, the reaction vessel is cooled to just below reflux, and fitted with a Barrett trap below the condenser. Solvent is distilled off, until 130 grams of solvent is collected. Then the solution is cooled and poured into a lined metal can. The acid number of this polymer is between 19 and 21 milligrams of KOH per gram of resin solids, and its percent non-volatile is between 66% and 69%.

The diisocyanate / polyether adduct is formed by the reaction of one isocyanate group of a diisocyanate with the hydroxyl group of a Methoxy Polyethylene Glycol of the formula: CH₃O- (CH₂CH₂O)ₙ-H, where n = 7 - 45. This reaction is carried out in a dry air atmosphere, as follows.

In a 1-liter distillation flask, fitted with a water-cooled condenser and a dry air-sparge tube, under a dry air atmosphere, 231.7 grams of isophorone diisocyanate is combined with 35.9 grams of Urethane Grade Methyl Ethyl Ketone, and 374.5 grams of Methoxy Polyethylene Glycol of the formula: CH₃O-(CH₂CH₂O)ₙ-H (molecular weight = 350). The mixture is then stirred for 15 minutes at ambient temperature, and 0.2 grams of dibutyltin diacetate is added. The mixture is continuously stirred, and heated as necessary, to maintain a temperature of 60° C for two hours. The percent isocyanate of the adduct solution should be 6.7% - 6.9%, or 7.2% based on solids.

To make the final urethane / acrylic graft copolymer, 610.9 grams of the hydroxyl-functional acrylic polymer is combined with 94.6 grams of the diisocyanate / polyether adduct, and 60 grams of Toluene in a five-liter distillation flask, fitted with a water-cooled condenser, under a dry Nitrogen atmosphere. The mixture is heated to 75° C, and held at that temperature for two and one-half hours. The temperature is then increased until the solution reaches reflux (~ 104° C), and held at reflux for thirty minutes. The solution is then cooled to 75° C, and vacuum stripped (85 mbars pressure) to remove approximately 100 grams of solvent. The vacuum is broken with Nitrogen, and 220 grams of ethylene glycol monobutyl ether is added to the flask. After stirring the mixture for ten minutes, vacuum stripping is resumed. Stripping continues at 75° C / 85 mbars until a total of 210 to 212 grams (including the first 100 grams) of solvent has been removed. The solution is then cooled, and filtered into a lined can. The acid number is between 15 and 17 milligrams of KOH per gram of resin solids, and the percent non-volatile is between 66% and 69%.

### Preparation of Component A - Aluminum Base

A commerical solvent borne aluminum paste, 60.0g, was added to 60.0g of butoxyethanol. The mixture was stirred until a homogeneous dispersion was produced. To this dispersion, 30.0g, of the resin described above was added to the dispersion and the entire mixture stirred until a smooth, uniform slurry was produced. This aluminum base contains 39% volatile organic solvent by weight, a soldis level of 61.0% by weight, a binder level of 13% by weight and an aluminum flake level of 26.0% by weight.

### Preparation of Component B - Pigmented Base

The following pigment slurry was prepared, 12.2g of NeoCryl A-6037, 14.8g of Neocryl A-640, 0.3g of 30% aqueous ammonia, 3.2g of Perrindo Maroon R-6424 manufactured by Mobay Corporation, 0.1g of a defoamer and 0.05g of Surfynol 104BC manufactured by Air Products. The above mixture were mixed together and predispersed using a Cowles blade. The mixture was then ground on a sand mill until the desired particle size was achieved. A let down solution containing 29.5g of NeoCryl A-622, 2.6g of butoxyethanol, 1.3g of deionized water and 0.03g of 1% aqueous solution of FC-120 was added to the grind portion under agitation. An unpigmented base can be prepared using the procedure above with the elimination of the Perrindo Maroon R-6424 pigment. A wax dispersion was prepared by grinding 50.0g of a wax, 50.0g of unpigmented resin solution, 50.0 g of deionized water and 50.0g of butoxyethanol. This paste was ground to the desired particle size using conventional techniques. To the pigmented and unpigmented bases described above, 6.0g of this wax dispersion was added with stirring. The resulting pigmented base had a pH of 8.6, a solids level of 37.8% by weight, a volatile organic level of 10.6% by weight, a binder level of 33.3% by weight, a pigment level of 5.0% by weight and a water level of 51.6% by weight. The unpigmented base has a solid level of 34.7% by weight, volatile organic level of 9.4% by weight, a water level of 55.9% by weight and a pH of 8.7.

### Preparation of Component C - Reducer Base

To 1953.2g of deionized water, 31.3g of Laponite RD manufactured by Laporte Industries was added. The resulting solution was then agitated for one hour until the Laponite RD was completely dispersed. To this solution was added 8.0g of Troysol LAC manufactured by Troy Chemical Company and the entrie solution stirred for 15 minutes. The resulting solution was then diluted with 1953.2g of deionized water. To this Laponite RD dispersion was added 462.9g of NeoRez R-9637 manufactured by ICI Resins. The resulting mixture had a Laponite RD level of 0.71% by weight, Troysol LAC level of 0.18% by weight, water dispersible polyurethane level of 4.2% by weight and a volatile organic level of 1.1% by weight.

### EXAMPLE 23 - PREPARATION OF A WATER BORNE RED METALLIC BASE COAT

| Component | Parts by Weight |
|---|---|
| Component A Aluminum Base | 16.0 |
| Component B Pigmented Base | 44.0 |
| Component C Reducer Base | 95.0 |

The above formula was used to prepare a red metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventual polyurethane clear coat are listed below, including appearance ratings.

| Properties of the Red Metallic Base Coat and Base Coat, Clear Coat System | |
|---|---|
| Property | Value |
| Water | 72.5 % |
| Volatile Organic | 7.4 % |
| Pigment | 2.4 % |
| Nonvolatile | 20.1 % |
| Binder | 10.8 % |
| Weight per l (Gallon (lbs/gal)) | (8.4) 1010 g |
| VOC (lbs/gal) | (2.2) 264,5 g/l |
| Gloss, 20 deg | 92 |
| DOI | 87 |
| Adhesion | good |
| Film Thickness (mil) | (0.29) 7,4 µm |
| Humidity | good |
| Water Spray | excell. |
| Metal Control | excell. |

### EXAMPLE 24 - Preparation of a Water Borne Silver Metallic Base Coat

| | |
|---|---|
| Component A Aluminum Base | 16.0g |
| Component B Unpigmented Base | 44.0g |
| Component C Reducer Base | 95.0g |

The above formula was used to prepare a silver metallic base coat. The order of addition is that listed. After each introduction of a component, the entire solution was stirred. The base coat was sprayed on panels primed with an epoxy primer. The base coat was sprayed on the substrate using conventional spray equipment until hiding was achieved. The base coat was allowed to flash for 30 minutes and then clear coated with a transparent coating based on isocyanate technology. The final properties of the base coat after coating with a conventional polyurethane clear coat are listed below, including appearance ratings.

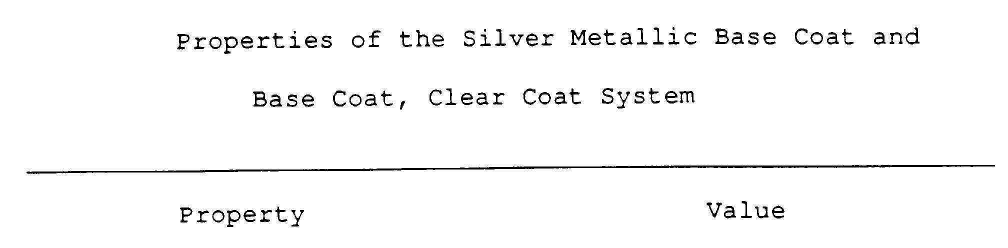

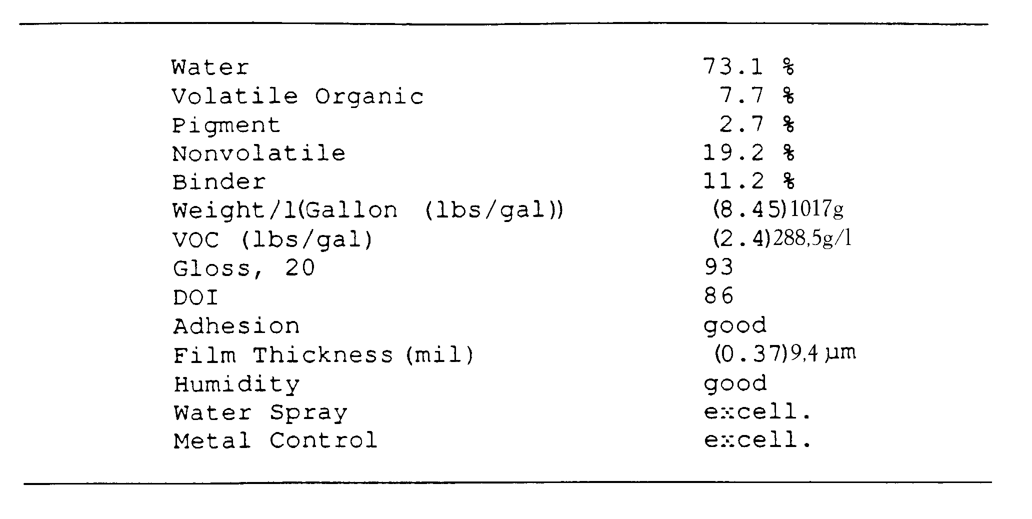

## Claims

1. Kit compositions for the preparation of waterborne coating compositions comprising
A) a slurry of metallic pigment flakes in a solvent borne water reducible acrylic resin having nonionic and acid functionality and water miscible solvent(s),
B) an aqueous pigmented or unpigmented base containing an acrylic latex resin and,
C) a reducer base containing a rheology control agent.

2. Kit compositions according to claim 1 characterized in that the solvent borne water reducible acrylic resin having nonionic and acid functionality results from the solution polymerization of ethylenically unsaturated monomers wherein at least two ethylenically unsaturated monomers are acid and poly(ethylene oxide) functional to give a polymer with a glass transition temperature from about -20 to 50°C (using the Fox method of Tg calculation), number average molecular weight of 1,000 to 50,000, an acid number of 5 to 50, a hydroxyl number of 0 - 50, and a final poly(ethylene oxide) level of 1 - 50% by weight.

3. Kit compositions according to claim 1 characterized in that the solvent borne water reducible acrylic resin having nonionic and acid functionality is formed by the free radical initiated polymerization of:
a) at least one monomer having acid functionality,
b) at least one monomer having urethane and nonionic functionality prepared by the reaction of:
1. a capped polyether having a single active hydrogen functionality with a polyisocyanate compound to produce a partially capped isocyanate intermediate which is further reacted with an ethylenically unsaturated compound having at least one active hydrogen group to produce an ethylenically unsaturated compound having urethane and nonionic functionality, or
2. a capped polyether having a single active hydrogen functionality with a polyisocyanate compound having ethylenically unsaturated functionality to produce an ethylenically unsaturated compound having urethane and nonionic functionality, and
c) at last one ethylenically unsaturated compound.

4. Kit compositions according to claim 1 characterized in that the solvent borne water reducible acrylic resin having nonionic and acid functionality is prepared by the reaction of an acrylic resin having active hydrogen functionality with an isocyanate adduct having urethane and nonionic functionality.

5. Use of kit compositions according to claims 1 to 4 in the refinish market.

## Patentansprüche

1. Mehrkomponentensysteme zur Herstellung von wäßrigen Lackzusammensetzungen, enthaltend
A) eine Aufschlämmung von Metallpigmentflakes in einem lösungsmittelhaltigen, wasserverdünnbaren Acrylharz mit nichtionischer und Säurefunktionalität und einem oder mehreren mit Wasser mischbaren Lösungsmitteln,
B) eine wäßrige pigmentierte oder nicht pigmentierte Basis, enthaltend ein Acryllatexharz, und
C) eine Verdünnerbasis, enthaltend ein rheologiesteuerndes Mittel.

2. Mehrkomponentensysteme nach Anspruch 1, dadurch gekennzeichnet, daß das lösungsmittelhaltige, wasserverdünnbare Acrylharz mit nichtionischer und Säurefunktionalität sich aus der Lösungspolymerisation von ethylenisch ungesättigten Monomeren, wobei mindestens zwei ethylenisch ungesättigte Monomere säure- und poly(ethylenoxid)-funktionell sind, zu einem Polymer mit einer Glasübergangstemperatur von etwa -20 bis 50°C (Tg-Berechnung nach Fox), einem zahlenmittleren Molekulargewicht von 1.000 bis 50.000, einer Säurezahl von 5 bis 50, einer Hydroxylzahl von 0 - 50 und einem Poly(ethylenoxid)-Endgehalt von 1 - 50 Gew.-% ergibt.

3. Mehrkomponentensysteme nach Anspruch 1, dadurch gekennzeichnet, daß das lösungsmittelhaltige, wasserverdünnbare Acrylharz mit nichtionischer und Säurefunktionalität gebildet wird durch radikalisch initiierte Polymerisation von:
a) mindestens einem Monomer mit Säurefunktionalität,
b) mindestens einem Monomer mit Urethan- und nichtionischer Funktionalität, hergestellt durch Umsetzung von:
1. einem blockierten Polyether mit einem einzigen aktiven Wasserstoff mit einer Polyisocyanatverbindung zu einem teilblockierten Isocyanat-Zwischenprodukt, das dann mit einer ethylenisch ungesättigten Verbindung mit mindestens einem aktiven Wasserstoff zu einer ethylenisch ungesättigten Verbindung mit Urethan- und nichtionischer Funktionalität weiter umgesetzt wird, oder
2. einem blockierten Polyether mit einem einzigen aktiven Wasserstoff mit einer Polyisocyanatverbindung mit ethylenisch ungesättigter Funktionalität zu einer ethylenisch ungesättigten Verbindung mit Urethan- und nichtionischer Funktionalität, und
c) mindestens einer ethylenisch ungesättigten Verbindung.

4. Mehrkomponentensysteme nach Anspruch 1, dadurch gekennzeichnet, daß das lösungsmittelhaltige, wasserverdünnbare Acrylharz mit nichtionischer und Säurefunktionalität durch Umsetzung eines Acrylharzes mit aktivem Wasserstoff mit einem Isocyanat-Addukt mit Urethan- und nichtionischer Funktionalität hergestellt wird.

5. Verwendung von Mehrkomponentensystemen nach den Ansprüchen 1 bis 4 bei der Reparaturlackierung.

## Revendications

1. Compositions kit pour la préparation de compositions aqueuses de revêtements comprenant
A) une suspension de paillettes de pigment métallique dans une résine acrylique, dissoute dans un solvant, diluable à l'eau, ayant une fonctionnalité non ionique et acide, et d'un solvant ou de solvant(s) miscible(s) à l'eau,
B) une base aqueuse pigmentée ou non pigmentée contenant une résine acrylique de latex et
C) une base de diluant contenant un agent de contrôle de la rhéologie.

2. Compositions kit selon la revendication 1, caractérisées en ce que la résine acrylique, dissoute dans un solvant, diluable à l'eau, ayant une fonctionnalité non ionique et acide, provient de la polymérisation en solution de monomères éthyléniquement insaturés, où au moins deux monomères éthyléniquement insaturés sont à fonctionnalité acide et à fonctionnalité de poly(oxyde d'éthylène) pour donner un polymère ayant une température de transition vitreuse allant d'environ -20 à 50°C (par utilisation de la méthode de Fox pour le calcul de Tg), un poids moléculaire moyen au nombre de 1 000 à 50 000, un indice d'acidité de 5 à 50, un indice hydroxyle de 0 - 50 et un niveau final de poly(oxyde d'éthylène) de 1 - 50 % en poids.

3. Compositions kit selon la revendication 1, caractérisées en ce que la résine acrylique, dissoute dans un solvant, diluable à l'eau, ayant une fonctionnalité non ionique et acide, est formée par la polymérisation initiée à l'aide de radicaux libres de:
a) au moins un monomère ayant une fonctionnalité acide,
b) au moins un monomère ayant une fonctionnalité uréthanne et non ionique, préparé par la réaction:
1. d'un polyéther bloqué ayant une fonctionnalité d'hydrogène actif unique avec un composé de polyisocyanate, pour produire un produit intermédiaire d'isocyanate partiellement bloqué que l'on fait réagir en plus avec un composé éthyléniquement insaturé ayant au moins un groupement d'hydrogène actif, pour produire un composé éthyléniquement insaturé ayant une fonctionnalité uréthanne et non ionique, ou
2. d'un polyéther bloqué ayant une fonctionnalité d'hydrogène actif unique avec un composé de polyisocyanate ayant une fonctionnalité éthyléniquement insaturée, pour produire un composé éthyléniquement insaturé ayant une fonctionnalité uréthanne et non ionique, et
c) et, finalement, d'un composé éthyléniquement insaturé.

4. Compositions kit selon la revendication 1, caractérisées en ce que la résine acrylique, dissoute dans un solvant, diluable à l'eau, ayant une fonctionnalité non ionique et acide, est préparée par la réaction d'une résine acrylique ayant une fonctionnalité d'hydrogène actif, avec un produit d'addition ayant une fonctionnalité uréthanne et non ionique.

5. Utilisation de compositions kit selon les revendications 1 à 4 dans le marché de la refinition.
